(19) **Europäisches Patentamt**
**European Patent Office**
**Office européen des brevets**

(11) **EP 3 068 823 B1**

(12) **EUROPEAN PATENT SPECIFICATION**

(45) Date of publication and mention
of the grant of the patent:
**24.07.2019 Bulletin 2019/30**

(51) Int Cl.:
***C08J 5/06*** *(2006.01)*    ***C08J 5/24*** *(2006.01)*
***C08L 63/00*** *(2006.01)*

(21) Application number: **14861131.2**

(22) Date of filing: **22.10.2014**

(86) International application number:
**PCT/US2014/061818**

(87) International publication number:
**WO 2015/119676 (13.08.2015 Gazette 2015/32)**

(54) **FIBER-REINFORCED RESIN COMPOSITES AND METHODS OF MAKING THE SAME**

FASERVERSTÄRKTE HARZVERBUNDSTOFFE UND VERFAHREN ZUR HERSTELLUNG DAVON

COMPOSITES DE RÉSINE RENFORCÉS DE FIBRES ET LEURS PROCÉDÉS DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2014 US 201414172040**

(43) Date of publication of application:
**21.09.2016 Bulletin 2016/38**

(73) Proprietor: **The Boeing Company**
**Chicago, IL 60606-1596 (US)**

(72) Inventors:
• **SCHNEIDER, Terrence Lee**
**Chicago, Illinois 60606 (US)**
• **CHRISTENSEN, Stephen**
**Chicago, Illinois 60606 (US)**
• **GOSSE, Jonathan Henry**
**Chicago, Illinois 60606-2016 (US)**

(74) Representative: **Witte, Weller & Partner**
**Patentanwälte mbB**
**Postfach 10 54 62**
**70047 Stuttgart (DE)**

(56) References cited:
**US-A1- 2007 149 725      US-A1- 2012 149 802**

**Description**

**BACKGROUND INFORMATION**

**Field:**

The present disclosure relates generally to fiber-reinforced resin composites and deals more particularly with a composite having fibers coated with a distortional resin.

**Background:**

Aircraft are being designed and manufactured with greater and greater percentages of composite materials. Composite materials are used in aircraft to decrease the weight of the aircraft. This decreased weight improves performance features such as payload capacities and fuel efficiencies. Further, composite materials provide longer service life for various components in an aircraft.

Composite materials may be tough, light-weight materials created by combining two or more functional components. For example, a composite material may include reinforcing fibers bound in a polymeric resin matrix. The fibers may be unidirectional or may take the form of a woven cloth or fabric. The fibers and resins may be arranged and cured to form a composite material.

In fiber-reinforced composites, the efficiency of load transfer between the fiber and the surrounding matrix at the micro-scale level, may directly affect the overall mechanical performance of the composite at the continuum level. The region of the matrix that may be substantially affected by the presence of fibers, sometimes referred to as the "interphase" region, is the interfacial area of the matrix directly surrounding the fiber. In composites, this interphase region may experience high shear strain due to the mismatch in elastic stiffness between the fibers and the surrounding matrix.

Widely-used conventional bulk resins may not provide desirable distortional capabilities. As a result, various resin matrix formulations have been developed to improve the distortional capability of a polymer resin. However, formulations demonstrating higher distortional capability performance potential may have a higher cost than conventional bulk resins. Formulations demonstrating higher distortional capability may also have other undesirable limitations. These other undesirable limitations may include limited fluid resistance, low glass transition temperature, and less than desired prepreg handling characteristics such as insufficient tack and/or prepreg handling life. These undesirable limitations may be partially addressed by modifying the chemistry of the bulk polymer resin forming the matrix. However these modifications may require development of specialized monomers or additives which can add to product cost. Moreover, these specialized formulations and additives may undesirably reduce other performance properties of the composite. There is also a need for a method of making such composites that uses conventional bulk resins and avoids the need for resin additives or special resin formulations. Therefore, it would be desirable to have a method and apparatus that take into account at least one of the issues discussed above as well as possibly other issues.

US 2012/149802 A1 discloses a fiber reinforced resin composite including a coating on the fibers that improves load transfer between the fibers and the surrounding resin matrix. US 2007/149725 A1 relates to composites having increased distortional deformation, and/or decreased dilatation load, as expressed within the von Mises strain relationship, which provide increased von Mises strain results. The composites may provide enhanced composite mechanical performances.

**SUMMARY**

The invention is defined in the appended claims.

An illustrative aspect of the present disclosure provides a fiber-reinforced resin composite comprising a polymeric resin matrix and a plurality of fibers coated with a first distortional polymeric resin. The polymeric resin matrix has a first von Mises strain. The first distortional polymeric resin has a second von Mises strain in a range of approximately 0.25 to approximately 0.45. The plurality of fibers coated with the first distortional polymeric resin are disposed in the polymeric resin matrix. The second von Mises strain is greater than the first von Mises strain.

Another aspect of the present disclosure provides a fiber-reinforced resin composite comprising a polymeric resin matrix having a first von Mises strain, a plurality of fibers disposed in the polymeric resin matrix, and a distortional interphase region surrounding the plurality of fibers. The plurality of fibers has a second von Mises strain. A ratio of the second von Mises strain to the first von Mises strain is greater than or equal to about 1.04.

Yet another aspect of the present disclosure provides a method of making a fiber-reinforced resin composite. The method comprises embedding a plurality of fibers coated with a first distortional polymeric resin in a polymeric resin matrix. A first von Mises strain of the first distortional polymeric resin in a cured state is in a range of approximately 0.25 to approximately 0.45. A second von Mises strain of the polymeric resin matrix is less than the first von Mises strain.

The features, functions, and advantages can be achieved independently in various illustrative examples of the present disclosure or may be combined in yet other embodiments in which further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and advantages thereof, will best be understood by reference to the following detailed description of an illustrative embodiment of the present disclosure when read in conjunction with the accompanying drawings, wherein:

Figure 1 is an illustration of an aircraft in accordance with an illustrative embodiment;
Figure 2 is an illustration of a functional block diagram of a composite employing distortional resin coated fibers in accordance with an illustrative embodiment;
Figure 3 is an illustration of a sectional view of a fiber tow of distortional resin coated filaments in accordance with an illustrative embodiment;
Figure 4 is a more detailed illustration of a fiber tow of distortional resin coated filaments in accordance with an illustrative embodiment;
Figure 5 is a more detailed illustration of a cross sectional view of an individual distortional resin coated filament in accordance with an illustrative embodiment;
Figure 6 is an illustration showing the use of a two types of reinforcing fibers having differing moduli or strength and distortional resin coatings in accordance with an illustrative embodiment;
Figure 7 is an illustration of a cross sectional view of a fiber having multiple distortional resin coatings in accordance with an illustrative embodiment;
Figure 8 is an illustration of a sectional view of a composite having discontinuous reinforcing fibers coated with a distortional resin in accordance with an illustrative embodiment;
Figure 9 is an illustration of a flow diagram of a method of fabricating a composite structure using distortional resin coated fibers in accordance with an illustrative embodiment;
Figure 10 is an illustration of a block diagram of a fiber-reinforced resin composite in accordance with an illustrative embodiment;
Figure 11 is an illustration of a flowchart of a process for forming a fiber-reinforced resin composite in accordance with an illustrative embodiment;
Figure 12 is an illustration of aircraft manufacturing and service method in the form of a block diagram in accordance with an illustrative embodiment;
Figure 13 is an illustration of a block diagram of an aircraft in which an illustrative embodiment may be implemented;
Figure 14 is an illustration of a graph of stress vs. strain behavior for tensile coupons in accordance with an illustrative embodiment; and
Figure 15 is an illustration of a graph of stress vs. strain behavior for tensile coupons in accordance with an illustrative embodiment.

## DETAILED DESCRIPTION

The different illustrative embodiments recognize and take into account a number of different considerations. For example, the different illustrative embodiments recognize and take into account that distortional polymeric resins may improve mechanical load-bearing capability of fibers in composite materials such as carbon fiber laminates. As used herein, a "distortional polymeric resin" refers to a polymeric resin having a von Mises strain of greater than or equal to approximately 0.25. In some illustrative examples, the "distortional polymeric resin" may have a von Mises strain in a range of approximately 0.25 to approximately 0.45. The inventors have found by experimental testing that as much as an 80% improvement in tensile strength properties of carbon fiber laminates can be achieved when fabricated with a distortional polymeric resin in comparison to the same carbon fiber utilized in laminates with current conventional polymeric resins.

However, the different illustrative embodiments also recognize and take into account that fiber-reinforced resin composites having a polymeric resin matrix primarily comprising distortional polymers may have undesirable properties compared to fiber-reinforced resin composites utilizing conventional bulk resins for the polymeric resin matrix. For example, the different illustrative embodiments recognize and take into account that fiber-reinforced resin composites utilizing a polymeric resin matrix primarily comprising distortional polymers may have at least one of an undesirable modulus of elasticity, glass transition temperature, fluid resistance or tack life compared to a fiber-reinforced resin composite utilizing conventional bulk resins for the polymeric resin matrix.

The different illustrative embodiments further recognize and take into account that distortional polymeric resins may be more expensive than conventional bulk resins. For example, monomers utilized in distortional polymeric resin formulations may be higher in cost due to their unique "built-in" molecular features. As another example, monomers utilized in distortional polymeric resins may be available in lower volumes than monomers used in conventional bulk resins. Monomers used in conventional bulk resins may be commodity compounds commercially available from industrial-scale manufacturers.

The different illustrative embodiments also recognize and take into account that fiber-reinforced resin composites using both a distortional polymeric resin and a conventional bulk resin may result in desirable characteristics. Specifically, desirable material performance may result from using both a distortional polymeric resin and a conventional bulk resin. Further, using both a distortional polymeric resin and a conventional bulk resin may have lower manufacturing costs than fiber-reinforced composites using only distortional polymeric resins. Further, desirable characteristics may result from surrounding a distortional polymeric resin with a conventional bulk resin present in higher volumes as the polymeric resin matrix.

The illustrative embodiments also recognize and take into account that fiber-reinforced resin composites comprising fibers coated with a distortional polymeric resin embedded in a conventional bulk resin may desirably possess distortional deformation characteristics of the distortional polymeric resin. Further, fiber-reinforced resin composites comprising fibers coated with a distortional polymeric resin embedded in a conventional bulk resin may have desirable load-bearing capability, such as tensile strength. The illustrative embodiments further recognize and take into account that fiber-reinforced resin composites comprising fibers coated with a distortional polymeric resin embedded in a conventional bulk resin may have one or more desirable properties of the bulk polymeric resin matrix.

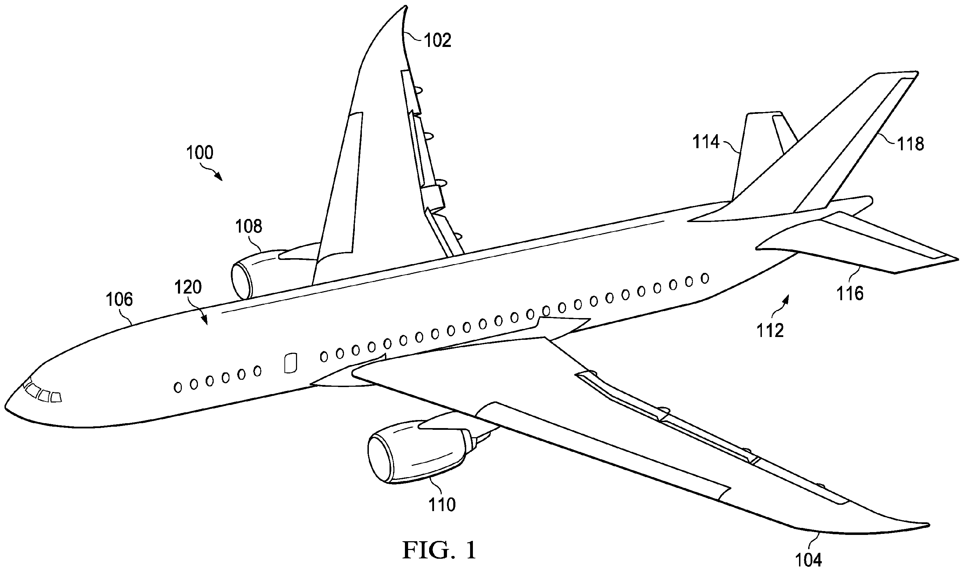

With reference now to the figures, and in particular, with reference to **Figure 1,** an illustration of an aircraft is depicted in accordance with an illustrative embodiment. In this illustrative example, aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example in which various illustrative embodiments of the fiber-reinforced resin composites disclosed herein may be implemented. Fiber-reinforced resin composites having fibers coated with a distortional polymeric resin disclosed herein may, for example, be used as a material for components of aircraft **100** where a lightweight reinforced composite material may be of benefit. As another example, fiber-reinforced resin composites having fibers coated with a distortional polymeric resin may be used as a material in spars (not shown) of wing **104.** As yet another example, composite skin **120** of body **106** or wing **104** may comprise fiber-reinforced resin composite having fibers coated with a distortional polymeric resin.

The illustration of aircraft **100** in **Figure 1** is not meant to imply physical or architectural limitations to the manner in which an illustrative embodiment may be implemented. For example, although aircraft **100** is a commercial aircraft, aircraft **100** may be a military aircraft, a rotorcraft, a helicopter, an unmanned aerial vehicle, or any other suitable aerospace structure.

Although the illustrative examples for an illustrative embodiment are described with respect to an aircraft or other aerospace structure, the illustrative embodiment may be applied to other types of platforms. The platform may be, for example, a mobile platform, a stationary platform, a land-based structure, an aquatic-based structure, and a space-based structure. More specifically, the platform, may be a surface ship, a tank, a personnel carrier, a train, a spacecraft, a space station, a satellite, a submarine, an automobile, a power plant, a bridge, a dam, a house, a windmill, a manufacturing facility, a building, and other suitable platforms.

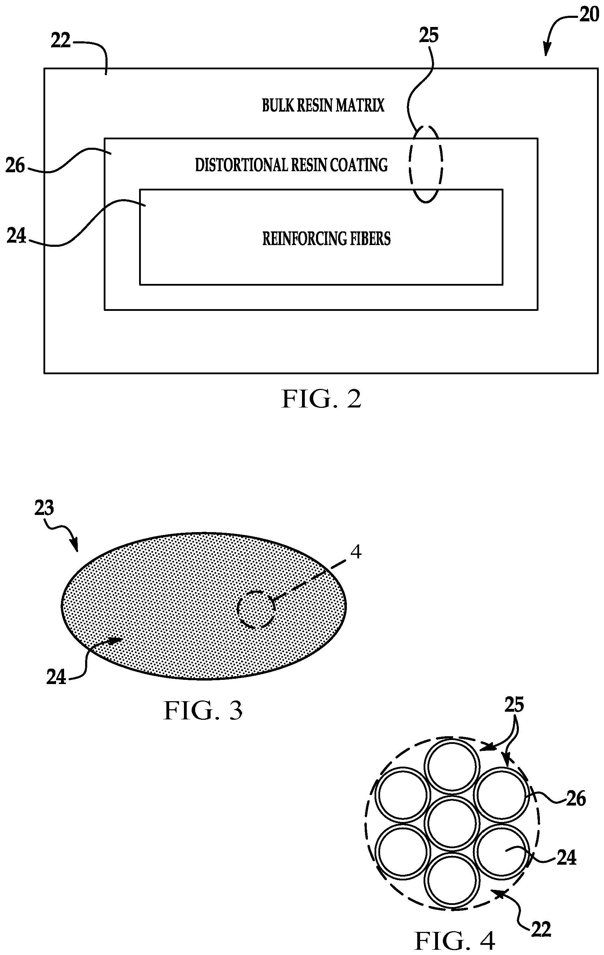

Referring to **Figure 2,** a block diagram of a composite **20** is depicted in accordance with an illustrative embodiment. Composite **20** comprises fibers **24** embedded in a polymeric resin matrix **22.** Fibers **24** may be reinforcing fibers. Fibers **24** may be continuous or discontinuous (e.g. chopped fibers) and may be formed from any of a variety of materials, including but not limited to carbon, glass, organics, metallic, ceramic and others. In various illustrative examples, fibers **24** have a distortional resin coating **26** thereon having a relatively high distortional deformation capability compared to the distortional deformation capability of surrounding polymeric resin matrix **22.** Polymeric resin matrix **22** may comprise a conventional bulk resin. Distortional resin coating **26** may result in significant improvements in mechanical performance of composite **20,** such as increased ultimate strength and/or strain as well as potential improvements in delamination and micro-crack resistance. As used herein, the phrase "and/or" shall be construed as an "inclusive" or, and not an "exclusive" or. For example, used herein the phrase "A and/or B" would mean "A, B, or A and B." As another example, the phrase "A, B, and/or C," as used herein, would mean "A, B, C, or any combination thereof."

The distortional deformation capability of distortional resin coating **26,** which may be expressed in terms of von Mises strain performance, is high relative to polymeric resin matrix **22** in order to achieve optimum fiber-resin load transfer capability between fibers **24** and surrounding polymeric resin matrix **22.** The von Mises strain or stress is an index derived from combinations of principle stresses at any given point in a material to determine at which point in the material, stress will cause failure. Polymeric resin matrix **22** may have a distortional capability lower than that of fibers **24,** exhibited by a lower von Mises strain performance. Nevertheless, composite **20** may exhibit greater overall mechanical performance than a composite fabricated without distortional resin coating **26** having fibers **24** and polymeric resin matrix **22.**

Distortional resin coating **26** may be a polymeric distortional resin coating. Background examples of materials suitable for distortional resin coating **26** may be found in US Patent No. 7,745,549. The compositions disclosed in US Patent No. 7,745,549 exhibit increased distortional deformation, and/or decreased dilatation load, as expressed within the von Mises strain relationship. As discussed in US Patent No. 7,745,549, fiber performance may be limited by low matrix-critical distortional capability of the thermoset resins used in known composites. The composite polymer matrixes of US Patent No. 7,745,549 exhibits improved (i.e. increased) distortional deformation and/or decreased (i.e. lower) dilatation load, increasing von Mises strain and providing enhanced composite mechanical performance.

It is hypothesized that that a polymeric resin with improved distortional capability is able to transfer load around microscale flaws in the fiber, which can be considered failure initiation sites in the fiber, along the longitudinal axis of the fiber when the fiber experiences a load. This ability to redistribute the load around the flaws may allow the fiber to continue to sustain load without failure. The molecular basis for a polymer matrix's ability to undergo a distortional response to an applied force is theorized as being due to a cooperative motion of a specific volume or segment of the polymer chain. Therefore, molecular structures which are able to conform ally adjust with applied force will enhance the polymer's ability to undergo and increase its distortional response.

In various illustrative examples, composite **20** may comprise a distortional interphase region **25** comprising a distortional resin disposed between fibers **24** and polymeric resin matrix **22.** Distortional interphase region **25** may define all or part of a region in composite **20** that experiences high shear strain upon application of an applied force to composite **20.** Not wishing to be bound by theory, it is believed that such high shear strain may be due to a mismatch between an elastic stiffness of fibers **24** and an elastic stiffness of polymeric resin matrix **22.** Again, not without wishing to be bound by theory, it is believed that a distinct distortional interphase region **25** surrounding each of fibers **24** and comprising distortional resin coating **26** may improve the overall mechanical performance of composite **20** by providing a distortional response to the application of an applied force to composite **20.** A distortional response may also be referred to as a deviatoric response and is a change in shape. Without wishing to be bound by theory, it is believed that the distortional or deviatoric response of polymeric resin matrix **22** to an applied force may be viewed as an abrupt shear transformation or cooperative motion of a specific volume or segment of the polymer chain responding to a strain bias.

Referring to **Figure 3,** an illustration of a sectional view of an individual fiber tow **23** is depicted in accordance with an illustrative example. An individual fiber tow **23** is pre-impregnated with a bulk matrix resin and comprises a multiplicity of individual filaments or fibers **24** each having a distortional resin coating **26** surrounded by bulk matrix resin. Bulk matrix resin may comprise any of a variety of polymeric resins used in high performance structural composites. Curing may transform bulk matrix resin into polymeric resin matrix **22** and embed coated fibers **24** in the polymeric resin matrix **22** as described above in **Figure 2.**

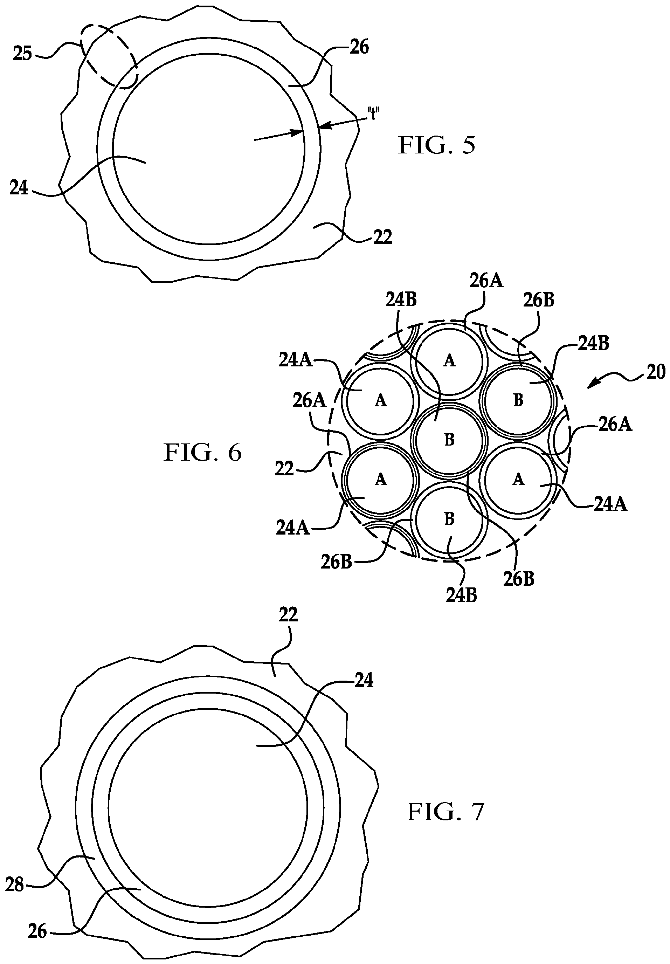

Distortional resin coating **26** may be applied to fibers **24** using any of various conventional techniques, including but not limited to dipping and spraying. The thickness "t" **(Figure 5)** of distortional resin coating **26** will depend upon the particular application and performance requirements of composite **20.**

As previously discussed, in fiber-reinforced composites, the efficiency of load transfer between reinforcing fibers **24** and surrounding polymeric resin matrix **22** at the microscale level may substantially affect the overall mechanical performance of composite **20.** The critical region of composite **20** affected by the presence of fibers **24,** is distortional interphase region **25.** Without wishing to be bound by theory, it is believed that this distortional interphase region **25** experiences relatively high shear strain due to the mismatch between the relatively high elastic stiffness of fibers **24** and the relatively low elastic stiffness of surrounding polymeric resin matrix **22.**

Bulk matrix resin forming polymeric resin matrix **22** may be any suitable commercial or custom resin system having the desired physical properties which are different from those of distortional resin coating **26.** These differences in physical properties result in distortional resin coating **26** having a higher distortional capability than that of polymeric resin matrix **22.** For example and without limitation, typical physical properties of the bulk matrix resin used in polymeric resin matrix **22** which may affect its distortional capability include but are not limited to: superior fluid resistance, increased modulus, increased high temperature performance, improved process ability and/or handling properties (such as the degree of tack and tack life) relative to distortional resin coating **26.**

In various illustrative examples, composite **20** may be produced from a prepreg. In such illustrative examples, distortional resin coating **26** may be applied to fibers **24** prior to impregnation of fibers **24** with bulk matrix resin. By impregnating fibers **24** after distortional resin coating **26** is applied, a variety of processes may be used to coat fibers **24.** After impregnating fibers **24,** the resulting impregnated fibers **24** may be cured. Curing may transform bulk matrix resin into polymeric resin matrix **22** and embed coated fibers **24** in the polymeric resin matrix **22.** In thus-formed composite **20,** polymeric resin matrix **22** surrounds coated fibers **24** embedded in polymeric resin matrix **22.**

In other illustrative examples, composite **20** may be produced from a fiber preform (not shown) coated with a distortional resin and infused with a bulk matrix material. In one such illustrative example, fibers of a fiber preform may be coated with distortional resin before being formed into the fiber preform. In another such illustrative example, a fiber preform may be formed from fibers **24** and then coated with a distortional resin such that fibers **24** have distortional resin coating **26.** The fiber preform coated with the distortional resin may then be infused with bulk matrix resin such that fibers **24** coated with distortional resin coating **26** are impregnated with bulk matrix resin. After impregnation, the fiber preform coated with the distortional resin and infused with bulk matrix resin may then be cured. During curing of the fiber preform coated with the distortional resin and infused with bulk matrix resin , polymeric resin matrix **22** forms from bulk matrix resin and fibers **24** having distortional resin coating **26** become embedded in polymeric resin matrix **22.**

**Figure 6** illustrates a composite **20** having two groups of fibers **24a, 24b** respectively having high and low moduli. Composites **20** having fibers **24a, 24b** with different moduli are sometimes referred to as hybrid composites. In some illustrative examples, differing distortional resin coatings **26a, 26b** may be respectively applied to groups of fibers **24a, 24b** having differing physical characteristics.

Referring to **Figure 7,** it may be desirable in some applications to apply multiple distortional resin coatings **26, 28** of distortional resins over fibers **24.** Multiple distortional resin coatings **26, 28** may have differing distortional deformation capabilities to form a transitional region that increases the load transfer ability between fibers **24** and the surrounding bulk resin forming polymeric resin matrix **22.** In this example, the distortional deformation capability of outer distortional resin coating **28** may be greater than that of inner distortional resin coating **26.**

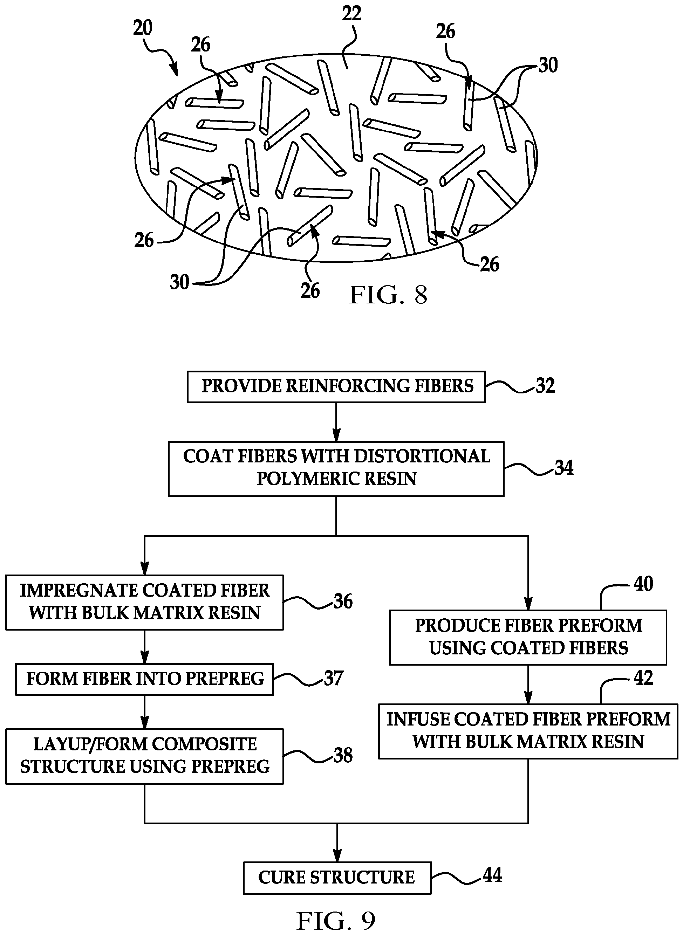

**Figure 8** illustrates a composite **20** comprising a polymeric resin matrix **22** that is reinforced with discontinuous fibers **30,** sometimes referred to as chopped fibers, each of which has a distortional resin coating **26.**

Attention is now directed to **Figure 9** which broadly illustrates the steps of a method of manufacturing a composite structure (not shown) using composite **20** previously described. Beginning at **32,** fibers **24** suitable for the application are provided which, as previously mentioned, may be continuous or discontinuous. At **34,** fibers **24** are coated with a distortional polymeric resin having a distortional capability that is greater than that of the polymeric resin forming polymeric resin matrix **22.**

In one illustrative example, at step **36,** the fibers **24** are impregnated with the bulk matrix resin, and at step **37** the impregnated, coated fibers **24** are formed into to a prepreg which may comprise prepreg tows, prepreg tape or a prepreg fabric. At **38,** a composite structure is laid up and formed using the prepreg. In another illustrative example, as shown in step **40,** the distortional resin coated fibers **24** are used to produce a dry or substantially dry fiber preform which, at step **42,** is infused with a bulk matrix resin using, for example, a vacuum assisted resin transfer molding process. Finally, at **44,** the structure is cured. During curing, distortional resin coated fibers **24** are embedded in surrounding polymeric resin matrix **22,** resulting in the previously described distortional interphase region **25** between fibers **24** and polymeric resin matrix **22.**

In some applications, it may be necessary to control migration of distortional resin coating **26** during the curing process. One solution to this problem involves formulating distortional resin coating **26** to have a viscosity that is higher than that of the bulk resin forming polymeric resin matrix **22.** During curing, distortional resin coating **26** is retained on the fibers' surface due to its higher viscosity and lessened ability to flow. Another solution to the problem consists of exposing the distortional resin coated fibers **24** to an appropriate elevated temperature after fibers **24** are coated in order to slightly cross link (cure) the distortional resin, thereby increasing its viscosity and its adherence to fibers **24.**

In one illustrative example, a method is provided of making a fiber-reinforced polymer resin, comprising coating reinforcing fibers with a first polymeric resin to form coated fibers, and embedding the coated fibers in a second polymeric resin. A distortional deformation capability of the first polymeric resin is greater than a distortional deformation capability of the second polymeric resin, and the first polymeric resin may be any of various resin chemistries exhibiting a high distortional deformation capability. The first polymeric resin may be an epoxy exhibiting a high distortional deformation capability. The fibers may have a modulus of elasticity higher than a modulus of elasticity of the first polymeric resin. The method further comprises selecting the fibers from the group consisting of carbon fibers, glass fibers, organic fibers, metallic fibers and ceramic fibers. The method may include applying a coating of a third polymeric resin over the coating of the first polymeric resin, wherein the third polymeric resin has a distortional deformation capability greater than the distortional deformation capability of the second polymeric resin and less than the distortional deformation capability of the first polymeric resin.

According to another illustrative example, a method is provided for making a fiber-reinforced polymer composite, comprising providing a bulk matrix resin and providing fibers for reinforcing a polymeric resin matrix formed from the bulk matrix resin. The method further comprises embedding the fibers in a polymeric resin matrix. Embedding the fibers in the matrix may include impregnating the fibers with the bulk matrix resin. Embedding the fibers may include curing the bulk matrix resin, wherein curing the bulk matrix resin forms a polymeric resin matrix. The method may further comprise forming a distortional interphase region between the fibers and the polymeric resin matrix, wherein the distortional interphase region improves load transfer between the fibers and the polymeric resin matrix. Forming the distortional interphase region includes coating the fibers with a polymeric distortional resin having at least one property different from the polymeric resin matrix. The at least one property is selected from the group consisting of fluid resistance, increased modulus, high temperature performance, processability, and handling properties. Providing fibers includes selecting the fibers from the group consisting of carbon fibers, organic fibers, metallic fibers and ceramic fibers. Providing fibers for reinforcing the polymeric resin matrix includes providing two groups of fibers respectively having different moduli, and forming the distortional interphase region between the fibers and the polymeric resin matrix includes coating the fibers in each of the groups with differing polymeric resins each having a distortional deformation capability higher than a distortional deformation capability of the polymeric resin matrix.

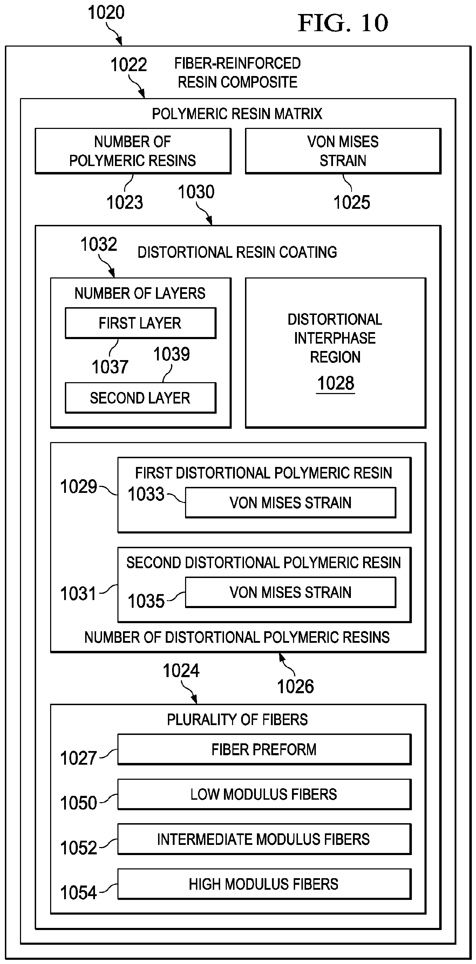

Referring to **Figure 10,** a block diagram of a fiber-reinforced resin composite is depicted in accordance with an illustrative example. Fiber-reinforced resin composite **1020** comprises polymeric resin matrix **1022,** plurality of fibers **1024,** and distortional resin coating **1030.** Specifically, fiber-reinforced resin composite **1020** comprises plurality of fibers **1024** coated with distortional resin coating **1030** embedded in polymeric resin matrix **1022.**

Polymeric resin matrix **1022** may comprise number of polymeric matrix resins **1023.** As used herein, "a number of", when used with reference to items, means one or more items. Number of polymeric matrix resins **1023** may include any polymeric resins capable of functioning as a matrix material of a fiber-reinforced composite. Number of polymeric matrix resins **1023** may be conventional bulk resins. Number of polymeric matrix resins **1023** may also be referred to as an uncured resinous matrix material or uncured resinous matrix materials. Number of polymeric matrix resins **1023** may include, but are not limited to, thermoset polymeric resins. Thermoset polymeric resins may include, for example, at least one of epoxy resins, phenolic and amino resins, polyimide resins, polyamide resins, polyurethane resins, or other suitable thermoset polymeric resins.

As used herein, the phrase "at least one of," when used with a list of items, means different combinations of one or more of the listed items may be used and only one of each item in the list may be needed. In other words, at least one of means any combination of items and number of items may be used from the list but not all of the items in the list are required. The item may be a particular object, thing, or a category. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations.

In some illustrative examples, polymeric resin matrix **1022** comprises at least one epoxy resin. In one such illustrative example, polymeric resin matrix **1022** may comprise at least one of a bisphenol A epoxy resin or a bisphenol F epoxy resin.

In some illustrative examples, number of polymeric matrix resins **1023** for polymeric resin matrix **1022** may include, but are not limited to, modified polymeric resins. Examples of suitable modified polymeric matrix resins include, but are not limited to, epoxy resins cured or partially cured in the presence of a curing agent, such as an amine curing agent. In an illustrative example, polymeric resin matrix **1022** comprises a modified epoxy resin including at least one of a bisphenol A epoxy resin or a bisphenol F epoxy resin and diaminodiphenylsulfone monomers.

In some illustrative examples, polymeric resin matrix **1022** may comprise one or more commercially available polymeric matrix resins. In some illustrative examples, polymeric resin matrix **1022** comprises one or more commercially available formulations of the thermoset polymers described above. In some illustrative examples, polymeric resin matrix **1022** comprises one or more commercially available epoxy resins. Commercially available epoxy matrix resins suitable for use in various illustrative examples may be obtained from, for example, Cytec Industries of Woodland Park, New Jersey under the tradename CYCOM (e.g., Cycom 977-3 epoxy resin system and Cycom 970 epoxy resin); Hexcel Corporation of Stamford, Connecticut under the tradename HEXPLY (e.g., HexPly 3501-6 epoxy matrix, HexPly 8552 epoxy matrix, and HexPly M21); and Toray Industries (America), Inc. of New York, New York (e.g., 3900-2 resin).

In various illustrative examples, polymeric resin matrix **1022** has von Mises strain **1025** of less than approximately 0.25. In some illustrative examples, polymeric resin matrix **1022** may have von Mises strain **1025** in a range of from approximately 0.18 to approximately 0.24.

Plurality of fibers **1024** may comprise one or more different types of fibers. Plurality of fibers **1024** may include any fibers capable of reinforcing a resinous composite. Plurality of fibers **1024** may include, for example, at least one of carbon fibers, glass fibers, organic fibers, metallic fibers, ceramic fibers, or other suitable fibers. In some illustrative examples, the fibers may include organic fibers selected from at least one of aramid fibers (e.g., Kevlar, Twaron, etc.), high molecular weight polyethylene (HMWPE) fibers, ultra high molecular weight polyethylene (UHMWPE) fibers, nylon fibers, or any other suitable organic fibers.

Plurality of fibers **1024** may comprise at least one of low modulus fibers **1050,** intermediate modulus fibers **1052,** or high modulus fibers **1054.** As used herein, low modulus fibers **1050** may also be referred to as fibers having a low modulus of elasticity. Low modulus fibers **1050** are fibers having a modulus of elasticity in the range of from approximately 20 million pounds per square inch (msi) to approximately 40 msi. In some illustrative examples, low modulus fibers **1050** may have a modulus of elasticity in a range of from approximately 33 msi to approximately 36 msi.

As used herein, intermediate modulus fibers **1052** may also be referred to as fibers having an intermediate modulus of elasticity. Intermediate modulus fibers **1052** are fibers having a modulus of elasticity in a range of from approximately 40 msi to approximately 45 msi.

As used herein, high modulus fibers **1054** may also be referred to as fibers having a high modulus of elasticity. High modulus fibers **1054** are fibers having a modulus of elasticity of greater than approximately 45 msi.

However, these ranges are not intended to limit the fibers that may be used in fiber-reinforced resin composite **1020**. Plurality of fibers **1024** may comprise fibers having moduli of elasticity outside of these ranges, alone or in combination with fibers having low, intermediate, and/or high moduli of elasticity.

In various illustrative examples, plurality of fibers **1024** comprises at least one of low modulus fibers **1050**, intermediate modulus fibers **1052,** or high modulus fibers **1054**. In some illustrative examples, plurality of fibers **1024** of fiber-reinforced resin composite **1020** comprises low modulus fibers **1050** and high modulus fibers **1054**. In other illustrative examples, plurality of fibers **1024** of fiber-reinforced resin composite **1020** comprises intermediate modulus fibers **1052** and high modulus fibers **1054**. In still other illustrative examples, plurality of fibers **1024** of fiber-reinforced resin composite **1020** comprises low modulus fibers **1050** and intermediate modulus fibers **1052.**

In various illustrative examples, plurality of fibers **1024** comprises carbon fibers. Commercially available carbon fibers suitable for use in various illustrative examples of the disclosure may be obtained from, for example, Toray Carbon Fibers America, Inc. of Decatur, Alabama under the tradename TORAYCA; Hexcel Corporation of Stamford, Connecticut under the tradename HEXTOW. Examples of carbon fibers commercially available from Toray Industries having moduli of elasticity in the low, intermediate, and high ranges are shown in Table II below.

TABLE 1

| Commercially Available Fibers Having Low, Intermediate, and High Modulus of Elasticity | | |
|---|---|---|
| **Range** | **Carbon Fiber Product*** | **Modulus of Elasticity** |
| Low Modulus | TORAYCA T300 | 33 msi |
| | TORAYCA T700S | 33 msi |
| Intermediate Modulus | TORAYCA T800S | 43 msi |
| High | TORAYCA M35J | 50 msi |
| Modulus | TORAYCA M40J | 55 msi |
| | TORAYCA M46J | 63 msi |
| | TORAYCA M50J | 69 msi |
| | TORAYCA M55J | 78 msi |
| | TORAYCA M60J | 85 msi |
| *As formulated on November **10, 2013.** | | |

In some illustrative examples, plurality of fibers **1024** may take the form of fiber preform **1027**. Fiber preform **1027** comprises plurality of fibers **1024** formed into a shape. In some illustrative examples, fiber preform **1027** may take the form of a sheet. Fiber preform **1027** may have a desirable shape for fiber-reinforced resin composite **1020**.

Distortional resin coating **1030** coats plurality of fibers **1024**. Distortional resin coating **1030** may also form distortional interphase region **1028** between plurality of fibers **1024** and polymeric resin matrix **1022**. Distortional resin coating **1030** may be formed of number of distortional polymeric resins **1026**.

In some illustrative examples, number of distortional polymeric resins **1026** may be a single polymeric resin. In other illustrative examples, number of distortional polymeric resins **1026** may be a combination of two or more polymeric resins. In some illustrative examples, number of distortional polymeric resins **1026** may be formed from a blend of polymeric resins. Number of distortional polymeric resins **1026** has a first von Mises strain of greater than or equal to approximately 0.25. In some illustrative examples, number of distortional polymeric resins **1026** has a first von Mises strain in a range of approximately 0.25 to approximately 0.45. As depicted, number of distortional polymeric resins **1026** may include first distortional polymeric resin **1029** and second distortional polymeric resin **1031.** First distortional polymeric resin **1029** has von Mises strain **1033**. Second distortional polymeric resin **1031** has von Mises strain **1035.**

In some illustrative examples, von Mises strain **1033** is greater than or equal to approximately 0.30. In other illustrative examples, von Mises strain **1033** is greater than or equal to approximately 0.40. In yet other illustrative examples, von Mises strain **1033** is in a range of from approximately 0.25 to approximately 0.30. In still further illustrative examples, von Mises strain **1033** is in a range of from approximately 0.30 to approximately 0.39.

In some illustrative examples, von Mises strain **1035** is greater than or equal to approximately 0.30. In other illustrative examples, von Mises strain **1035** is greater than or equal to approximately 0.40. In yet other illustrative examples, von Mises strain **1035** is in a range of from approximately 0.25 to approximately 0.30. In still further illustrative examples, von Mises strain **1035** is in a range of from approximately 0.30 to approximately 0.39.

The von Mises strain of a material can be calculated according to equation 1:

$$\varepsilon_{vM} = \left\{ \frac{1}{2} \left[ (\varepsilon_1 - \varepsilon_2)^2 + (\varepsilon_2 - \varepsilon_3)^2 + (\varepsilon_1 - \varepsilon_3)^2 \right] \right\}^{\frac{1}{2}} \qquad (1)$$

where $\varepsilon_{vM}$ represents the von Mises strain, and $\varepsilon_1$, $\varepsilon_2$, and $\varepsilon_3$ are the principal strains in the three principal planes. Values of $\varepsilon_1$, $\varepsilon_2$, and $\varepsilon_3$ for a particular material (e.g., the distortional polymeric resins described herein) may be determined experimentally, for example, via a mechanics of materials analysis. Values of $\varepsilon_1$, $\varepsilon_2$, and $\varepsilon_3$ for a particular material (e.g., the distortional polymeric resins described herein) may also be predicted, for example, via a finite element analysis (FEA) method.

In some illustrative examples, number of distortional polymeric resins **1026** may comprise a number of distortional epoxy resins. As used herein, a "distortional epoxy resin" refers to an epoxy resin having a von Mises strain greater than or equal to about 0.25. In some illustrative examples, a "distortional epoxy resin" has a von Mises strain in a range of approximately 0.25 to approximately 0.45. In an illustrative example, number of distortional polymeric resins **1026** comprises phenyl-isopropyl-phenyl-isopropyl-phenyl epoxy resin. In an illustrative example, number of distortional polymeric resins **1026** comprises a phenyl-methyl substituted methyline-phenyl epoxy resin.

In some illustrative examples, number of distortional polymeric resins **1026** comprises at least one epoxy resin and at least one amine, such as a diamine. The epoxy resins may include, for example, at least one of bisphenol F based tri-functional novolac epoxy resin, diglycidyl α, α'-bis(4-hydroxyphenyl)-p-diisopropylbenzene, diglycidyl ether of bisphenol-A, or any other suitable epoxy resin. The amines may include, for example, at least one of 4,4' bis(3-aminophenoxy) diphenylsulfone, 3,3' diamino diphenylsulfone, 1,3 bis(3-aminophenoxy) benzene, 1,3 bis(4-aminophenoxy)-2,2 dimethylpropane, 1,3 bis(3-aminophenoxy)-2,2 dimethylpropane, or other suitable amines. In such illustrative examples, the amount of the amine component may be in a range of from approximately 24 percent by weight (wt%) to about 65 wt% based on the total weight of number of distortional polymeric resins **1026.** In some illustrative examples, the amount of the amine may be greater than or equal to approximately 30 wt% based on the total weight of number of distortional polymeric resins **1026.** In some illustrative examples, the amount of the amine may be in a range of from approximately 30 wt% to approximately 65 wt% based on the total weight of number of distortional polymeric resins **1026.**

In some illustrative examples, number of distortional polymeric resins **1026** has a von Mises strain of greater than or equal to approximately 0.30 and comprises at least one of bisphenol F based tri-functional novolac epoxy resin and 4,4' bis(3-aminophenoxy) diphenylsulfone; bisphenol F based tri-functional novolac epoxy resin and 3,3' diamino diphenylsulfone; bisphenol F based tri-functional novolac epoxy resin and 1,3 bis(3-aminophenoxy) benzene; diglycidyl α, α'-bis(4-hydroxyphenyl)-p-diisopropylbenzene and 4,4' bis(3-aminophenoxy) diphenylsulfone; diglycidyl ether of bisphenol-A and 1,3 bis(4-aminophenoxy)-2,2 dimethylpropane ; diglycidyl ether of bisphenol-A and 3,3' diaminodiphenylsulfone; or diglycidyl ether of bisphenol-A and 1,3 bis(3-aminophenoxy)-2,2 dimethylpropane . In an illustrative example, distortional resin coating **1030** comprises diglycidyl α, α'-bis(4-hydroxyphenyl)-p-diisopropylbenzene and 4,4' bis(3-aminophenoxy)diphenylsulfone.

Number of distortional polymeric resins **1026** may comprise one or more commercially available distortional resin components. An example of a commercially available epoxy resin suitable for use as a distortional resin component in various illustrative examples herein is bisphenol F based tri-functional novolac epoxy resin, which may be obtained from Dow Chemical Company of Midland, Michigan under the tradename D.E.N. (e.g., D.E.N. 431). An example of a commercially available diamine suitable for use as a distortional resin component in various illustrative examples herein is 3,3' diaminodiphenylsulfone, which may be obtained from, for example, Showa Kako of Osaka, Japan under the tradename 3,3'-DDS.

Distortional resin coating **1030** is present in fiber-reinforced resin composite **1020** as a coating on plurality of fibers **1024**. The thickness of distortional resin coating **1030** over plurality of fibers **1024** may be uniform, variable, or a combination thereof. The composition of distortional resin coating **1030** may be heterogeneous, homogenous, or a combination thereof.

Distortional resin coating **1030** comprises number of layers **1032**. Each layer of number of layers **1032** may comprise one or more distortional polymeric resins of number of distortional polymeric resins **1026**. In some illustrative examples, number of layers **1032** comprises a single layer of distortional polymeric resin. In other illustrative examples, number of layers **1032** comprises two or more different layers of distortional polymeric resin. In such illustrative examples, the von Mises index of the individual layers of number of layers **1032** may be the same and/or different from the other layers of number of layers **1032**.

As depicted, number of layers **1032** has first layer **1037** and second layer **1039**. In some illustrative examples, first layer **1037** covers plurality of fibers **1024** while second layer **1039** covers first layer **1037**. In these illustrative examples, first layer **1037** comprises first distortional polymeric resin **1029** having von Mises strain **1033**. In these illustrative examples, second layer **1039** comprises second distortional polymeric resin **1031** having von Mises strain **1035**. In one illustrative example, von Mises strain **1035** is greater than von Mises strain **1033**. In another illustrative example, von Mises strain **1035** is greater than von Mises strain **1033** and von Mises strain **1025**.

In some illustrative examples, the von Mises strains of successive layers of number of layers **1032** decrease as the number of layers intervening between each individual layer and plurality of fibers **1024** increases. In one such illustrative example, number of layers **1032** includes first layer **1037** covering plurality of fibers **1024,** second layer **1039** covering first layer **1037,** and, optionally, a third layer covering second layer **1039**. In this illustrative example, a von Mises strain of first layer **1037** is greater than a von Mises strain of second layer **1039,** the von Mises strain of second layer **1039** is greater than a von Mises strain of the third layer, and the von Mises strains of the first, second, and third layers are all greater than von Mises strain **1025** of polymeric resin matrix **1022**.

In some illustrative examples, fiber-reinforced resin composite **1020** comprises fiber preform **1027** coated with number of distortional polymeric resins **1026** and impregnated with polymeric resin matrix **1022**. In one such illustrative example, the impregnated, coated fiber preform **1027** has been cured. In another such illustrative example, the impregnated, coated fiber preform **1027** is uncured or partially cured and has a tack life greater than a tack life of at least one distortional polymeric resin in number of distortional polymeric resins **1026**.

As briefly discussed above, fiber-reinforced resin composite **1020** may comprise distortional interphase region **1028** disposed between plurality of fibers **1024** and polymeric resin matrix **1022**. Distortional interphase region **1028** may define all or part of a region in fiber-reinforced resin composite **1020** that experiences high shear strain upon application of an applied force to fiber-reinforced resin composite **1020**. Distortional interphase region **1028** may be formed of distortional resin coating **1030**. Distortional interphase region **1028** may include at least a portion of number of distortional polymeric resins **1026** of distortional resin coating **1030**. Distortional interphase region **1028** may be bonded to at least one of chemical functional groups of plurality of fibers **1024** or chemical functional groups of polymeric resin matrix **1022**.

Not wishing to be bound by theory, it is believed that the high shear strain in distortional interphase region **1028** may be due to a mismatch between an elastic stiffness of plurality of fibers **1024** and an elastic stiffness of polymeric resin matrix **1022**. Again, not wishing to be bound by theory, it is believed that distortional interphase region **1028** may improve the overall mechanical performance of fiber-reinforced resin composite **1020** by providing a distortional response to the application of an applied force to fiber-reinforced resin composite **1020**. A distortional response may also be referred to as a deviatoric response and is a change in shape.

In various illustrative examples, fiber-reinforced resin composite **1020** may be characterized by a ratio of the von Mises strain of distortional interphase region **1028** to the von Mises strain of polymeric resin matrix **1022**. In one illustrative example, the ratio of the von Mises strain of distortional interphase region **1028** to the von Mises strain of polymeric resin matrix **1022** is greater than or equal to approximately 1.04. In another illustrative example, the ratio of the von Mises strain of distortional interphase region **1028** to the von Mises strain of polymeric resin matrix **1022** is in a range of from approximately 1.04 to approximately 1.25. In yet another illustrative example, the ratio of the von Mises strain of distortional interphase region **1028** to the von Mises strain of polymeric resin matrix **1022** is greater than or equal to approximately 1.25. In still another illustrative example, the ratio of the von Mises strain of distortional interphase region **1028** to the von Mises strain of polymeric resin matrix **1022** is a range of from approximately 1.25 to approximately 1.63. In yet another illustrative example, the ratio of the von Mises strain of distortional interphase region **1028** to the von Mises strain of polymeric resin matrix **1022** is greater than or equal to approximately 1.63.

Weight savings may be achieved in vehicles, such as aircraft, by incorporating fiber-reinforced resin composite **1020** containing distortional resin coating **1030**. Fiber-reinforced resin composite **1020** containing plurality of fibers **1024** coated with number of distortional polymeric resins **1026** may exhibit improved load-bearing characteristics, pound for pound, in comparison to conventional fiber-reinforced resin composites not having distortional resin coating **1030**. The different illustrative embodiments recognize and take into account that utilizing number of distortional polymeric resins **1026** as distortional resin coating **1030** for plurality of fibers **1024** of fiber-reinforced resin composite **1020** allows mechanical performance requirements and design tolerances of structural components for vehicles, such as aircraft, to be met using less material than would be required if conventional fiber-reinforced resin composites not having distortional resin coating **1030** were used, thus reducing vehicle weight and weight-sensitive operating costs.

Coating plurality of fibers **1024** with number of distortional polymeric resins **1026** prior to impregnating plurality of fibers **1024** with number of polymeric matrix resins **1023** may be a desirable method of producing fiber-reinforced resin composite **1020** and articles comprising such fiber-reinforced resin composites. The different illustrative embodiments recognize and take into account that coating plurality of fibers **1024** of fiber-reinforced resin composite **1020** with number of distortional polymeric resins **1026** prior to impregnating plurality of fibers **1024** with number of polymeric matrix resins **1023** may desirably increase the final spacing between the individual filaments of plurality of fibers **1024** in resultant fiber-reinforced resin composite **1020**. Increased separation between individual filaments of plurality of fibers **1024** in fiber-reinforced resin composite **1020** reduces residual strains that may develop, for example, in multi-ply laminates during a post-cure cool-down of a manufacturing process of the multi-ply laminates. The different illustrative embodiments recognize and take into account that fiber-reinforced resin composite **1020** cured with less internal residual strains may have improved load-bearing capability and/or fatigue life than fiber-reinforced resin composites with higher internal residual strains.

The illustration of fiber-reinforced resin composite **1020** in **Figure 10** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, as depicted, number of distortional polymeric resins **1026** comprises first distortional polymeric resin **1029** and second distortional polymeric resin **1031**. However, in some illustrative examples, number of distortional polymeric resins **1026** may only comprise first distortional polymeric resin **1029**. In other illustrative examples, number of distortional polymeric resins **1026** may comprise more than first distortional polymeric resin **1029** and second distortional polymeric resin **1031**.

As another example, as depicted, number of layers **1032** has first layer **1037** and second layer **1039**. However, in some illustrative examples, number of layers **1032** may only comprise first layer **1037**. In other illustrative examples, number of layers **1032** may comprise more layers than first layer **1037** and second layer **1039**.

In some illustrative examples, number of layers **1032** may further comprise a third layer. First layer **1037** may comprise first distortional polymeric resin **1029** and cover plurality of fibers **1024**. Second layer **1039** may comprise second distortional polymeric resin **1031** and cover first layer **1037**. The third layer may comprise a third distortional polymeric resin and cover the second layer.

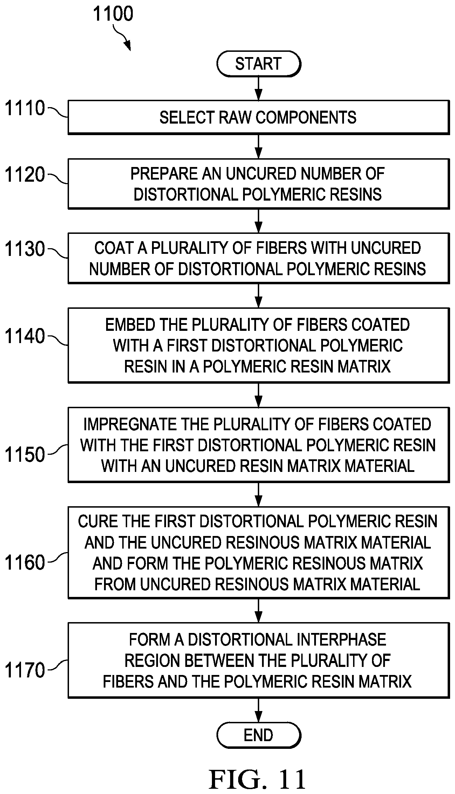

Turning now to **Figure 11,** an illustration of a flowchart of a process **1100** for forming fiber-reinforced resin composite **1020** is depicted in accordance with an illustrative example. Process **1100** may be implemented to form fiber-reinforced resin composite **1020** of **Figure 10.**

Process **1100** may begin by selecting raw components (operation **1110**). The raw components selected are the raw components to be used in making fiber-reinforced resin composite **1020**. Selecting raw components comprises selecting a number of uncured distortional polymeric resins and/or distortional resin components of number of distortional polymeric resins **1026,** a number of uncured resinous matrix materials, and plurality of fibers **1024.** In some illustrative examples, selecting raw components includes selecting a curing agent.

Selecting raw components may include choosing raw components such that fiber-reinforced resin composite **1020** will have desirable material properties. Further, selecting raw components may include choosing amounts and/or relative amounts of one or more of the raw components.

Process **1100** may then prepare an uncured number of distortional polymeric resins (operation **1120**). Number of distortional polymeric resins **1026** is prepared from the distortional resin components. Preparation of uncured number of distortional polymeric resins **1026** may include combining the distortional resin components. The combined distortional resin components may then be mixed and/or blended according to standard methods of blending polymer compositions from polymeric components known to those of ordinary skill in the art, thus forming uncured number of distortional polymeric resins **1026.** In various illustrative examples, the combined distortional resin components are mixed and/or blended such that the resulting uncured number of distortional polymeric resins **1026** is a heterogeneous and uniform blend of the distortional resin components. In some illustrative examples, selecting raw components involves choosing distortional resin components that will form a distortional polymeric resin having a von Mises strain of greater than approximately 0.25 upon combining and curing the distortional resin components.

Process **1100** may then coat a plurality of fibers **1024** with the uncured number of distortional polymeric resins **1026** (operation **1130**). In various illustrative examples, uncured number of distortional polymeric resins **1026** may be applied as a high solids resin to plurality of fibers **1024** using a hot melt technique.

In other illustrative examples, uncured number of distortional polymeric resins **1026** may be applied to plurality of fibers **1024** using a solution dip process. In a solution dip process, plurality of fibers **1024** is passed through a solution bath containing uncured number of distortional polymeric resins **1026.** As fibers pass through the solution, the distortional resin components accumulate on the fibers as a coating. The fibers are then dried, evaporating the solvent from the coating and partially reacting the distortional resin components to form a partially cured distortional polymeric resin. In one such illustrative example, the distortional resin components comprise one or more distortional epoxy resins and one or more distortional amines are dissolved in a solvent to form a solution. Plurality of fibers **1024** is passed through the solution of distortional epoxy resin and distortional amine, and the distortional epoxy resin and distortional amine accumulate on the fibers as a coating. The fibers coated with the distortional epoxy resin and distortional amine are then dried, evaporating the solvent and partially reacting the distortional epoxy resin with the distortional amine.

In some illustrative examples, coating plurality of fibers **1024** with number of distortional polymeric resins **1026** results in first layer **1037**. In some illustrative examples, coating plurality of fibers **1024** with number of distortional polymeric resins **1026** results in more than one layer of distortional polymeric resins **1026**. In illustrative examples in which multiple layers are present, additional layers of distortional polymeric resin may be applied according to the process used to apply the first coating layer. For example, if the first coating layer was applied using the hot melt technique, the hot melt technique may also be used to apply the one or more additional coating layers of uncured distortional polymeric resin over the first coating layer of uncured distortional polymeric resin. In other illustrative examples, the one or more additional coating layers of distortional polymeric resin may be applied according to a process different from the process used to apply the first coating layer. For example, if the first coating was applied using the solution dip process, the hot melt technique may be used to apply the one or more additional coating layers of distortional polymeric resin over the first coating layer of partially cured distortional polymeric resin. In yet other illustrative examples, additional coating layers of distortional polymeric resin may be applied using different techniques. In an illustrative example, a second coating layer of a second distortional polymeric resin is applied over the first coating layer using the hot melt technique and a third coating of a third distortional polymeric resin is applied over the first coating layer using the solution dip process.

In various illustrative examples, each of the coating layers of uncured distortional polymeric resins correspond to one of the layers of distortional resin coating **1030** in **Figure 10.** In some illustrative examples, plurality of fibers **1024** may be coated with two or more layers of distortional polymeric resin, the two or more layers having different von Mises strain values. In some illustrative examples, plurality of fibers **1024** may be coated with a first layer of distortional polymeric resin having a first von Mises strain greater than von Mises strain **1025** of polymeric resin matrix **1022,** and the first layer of distortional polymeric resin is coated with a second layer of distortional polymeric resin having a second von Mises strain greater than the first von Mises strain and the von Mises strain of polymeric resin matrix **1022.** In other illustrative examples, plurality of fibers **1024** may be coated with two or more layers of distortional resin and values of the von Mises strains of the individual layers of distortional resin decrease successively with increasing distance from plurality of fibers **1024.** That is, the values of the von Mises strains of the individual layers decrease in order from plurality of fibers **1024,** with the layer of distortional resin directly covering plurality of fibers **1024** having the highest von Mises strain of the individual layers and the layer directly covered by polymeric resin matrix **1022** having the lowest von Mises strain of the individual layers.

Not wishing to be bound by theory, it is believed that distortional resin coating **1030** comprising layers of distortional polymeric resin having successively decreasing von Mises strains act as a distortional deformation gradient that may provide various fiber-reinforced resin composites with further improved distortional deformation capabilities.

Process **1100** may then embed plurality of fibers **1024** coated with first distortional polymeric resin **1029** in polymeric resin matrix **1022** (operation **1140**). Process **1100** may then impregnate plurality of fibers **1024** coated with first distortional polymeric resin **1029** with an uncured resinous matrix material (operation **1150**). Impregnating plurality of fibers **1024** coated with first distortional polymeric resin **1029** may be performed simultaneously with embedding the fibers coated with first distortional polymeric resin **1029** in polymeric resin matrix **1022.** In other words, embedding may comprise the impregnation of the fibers coated with first distortional polymeric resin **1029** with an uncured resin matrix material.

Impregnation may be carried out according to techniques well known to those of ordinary skill in the art as suitable for impregnating fibers of fiber-reinforced resin composites with resinous matrix materials. In various illustrative examples, the resultant uncured or partially cured resinous prepreg may take at least one composite form selected from prepreg tows, prepreg tapes, or prepreg fabrics.

Although the term "impregnation" is used here, in illustrative examples in which plurality of fibers **1024** is in the form of fiber preform **1027,** operation **1150** may instead be referred to as resin infusion. In other words, in operation **1150,** fiber preforms such as fiber preform **1027** may undergo resin infusion.

In other words, in some illustrative examples, fiber-reinforced resin composite **1020** may be fabricated according to the resin infusion process represented by blocks **36, 37,** and **38** described above in connection with **Figure 9.** However, in some illustrative examples, fiber-reinforced resin composite **1020** may be fabricated according to the resin infusion process represented by blocks **40** and **42** described above in connection with **Figure 9.**

Process **1100** may then cure first distortional polymeric resin **1029** and the uncured resinous matrix material and form polymeric resin matrix **1022** from uncured resinous matrix material (operation **1160**). As a result of curing, polymeric resin matrix **1022** may be formed from the uncured resinous matrix material and distortional resin coating **1030** comprising number of distortional polymeric resins **1026** may be formed from the number of uncured and/or partially cured distortional polymeric resins. Thus, curing first distortional polymeric resin **1029** and the uncured resinous matrix material may be performed simultaneously or substantially simultaneously with embedding the fibers coated with first distortional polymeric resin **1029** in polymeric resin matrix **1022.** In other words, embedding may comprise the impregnation of the fibers coated with first distortional polymeric resin **1029** with an uncured resin matrix material.

In some illustrative examples, curing may be carried out in an autoclave. In these illustrative examples, curing is performed at elevated temperatures and pressures. In one illustrative example, curing may be carried out by applying a vacuum to a vacuum bag covering the uncured resinous matrix material. While a vacuum is pulled within the vacuum bag, pressure of 80 to 95 psig may be applied in the autoclave. While increased pressure is within the autoclave, heating may then take place including at least one of a ramp up, hold, or cool down regions. In some illustrative examples, the ramp up may include a heating rate of about 1 degree Fahrenheit to about 5 degrees Fahrenheit. The hold region may have a temperature of about 345 degrees Fahrenheit to about 365 degrees Fahrenheit. A cool down region may include a maximum cooling rate of about 5 degrees Fahrenheit..

In various illustrative examples, curing may be carried out in the presence of a curing agent. In some illustrative examples, the curing agent may facilitate reaction of the uncured resinous matrix material into polymeric resin matrix **1022** (e.g., by increasing the rate and/or degree of reaction). In some illustrative examples, the curing agent may facilitate reaction of the uncured resinous matrix material and/or polymeric resin matrix **1022** with distortional resin coating **1030** to form distortional interphase region **1028**. In some illustrative examples, the curing agent may react and combine with the uncured resinous matrix material, whereby the curing agent becomes part of polymeric resin matrix **1022**. In some illustrative examples, the curing agent may react and combine with distortional resin coating **1030** and/or the uncured resinous matrix material at the outer boundary of distortional resin coating **1030,** whereby the curing agent becomes a part of a region of fiber-reinforced resin composite **1020** transitions from distortional polymeric resin to polymeric resin matrix **1022.** In an illustrative example, the uncured resinous matrix material is cured in the presence of a curing agent comprising diaminodiphenylsulfone monomers. In an illustrative example, an uncured resinous matrix material comprising at least one of bisphenol A epoxy resin or bisphenol F epoxy resin is cured in the presence of a curing agent comprising diaminodiphenylsulfone monomers.

In some illustrative examples, process **1100** then forms distortional interphase region **1028** between plurality of fibers **1024** and polymeric resin matrix **1022** (operation **1170**), with the process terminating thereafter. This operation may be optional. In some illustrative examples, a distortional interphase region may not be formed. Forming the distortional interphase region may be performed simultaneously or substantially simultaneously with embedding the fibers coated with the first distortional polymeric resin in the polymeric resin matrix.

Depending on the degree of cure achieved by the curing, distortional interphase region **1028** may be formed of distortional resin coating **1030** between plurality of fibers **1024** and polymeric resin matrix **1022.** Distortional interphase region **1028** may be chemically and structurally distinct from polymeric resin matrix **1022.** Distortional interphase region **1028** may be bonded to at least one of chemical functional groups of fibers of the plurality of fibers **1024** or chemical functional groups of polymeric resin matrix **1022.**

The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, without limitation, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Additionally, some blocks may be optional.

For example, as described above, operations **1140, 1150, 1160,** and **1170** may be performed simultaneously or substantially simultaneously. Further, operation **1170** may not be performed. Yet further, operations **1110, 1120,** and **1130** may not be performed by the same actors as the remaining operations. As a result, an actor may perform process **1100** beginning at operation **1140.**

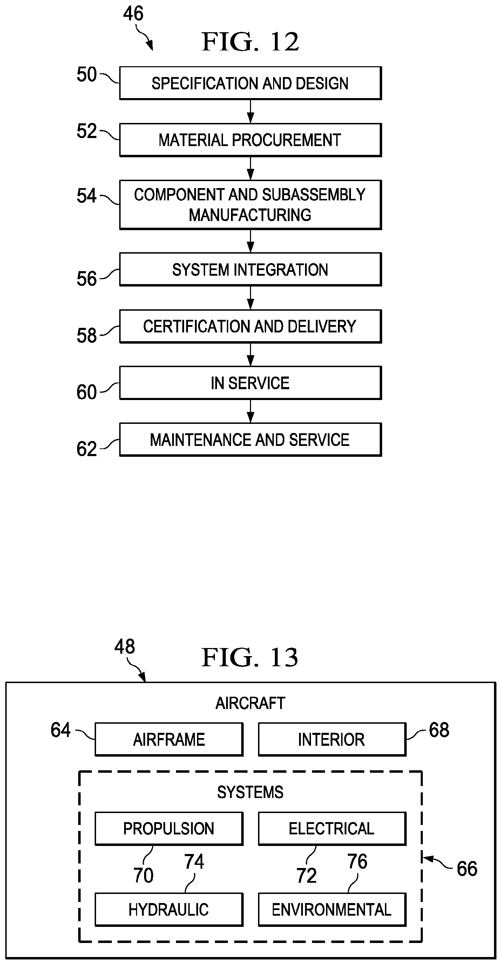

Referring next to **Figures 12** and **13,** illustrative examples of the disclosure may be used in the context of an aircraft manufacturing and service method **46** as shown in **Figure 12** and an aircraft **48** as shown in **Figure 13.** During pre-production, exemplary method **46** may include specification and design **50** of aircraft **48** and material procurement **52**. During production, component and subassembly manufacturing **54** and system integration **56** of aircraft **48** takes place. During step **54,** the disclosed method and apparatus may be employed to fabricate composite parts forming parts which are then assembled at step **56**. Thereafter, aircraft **48** may go through certification and delivery **58** in order to be placed in service **60**. While in service by a customer, aircraft **48** may be scheduled for routine maintenance and service **62** (which may also include modification, reconfiguration, refurbishment, and so on).

Each of the processes of method **46** may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in **Figure 13,** aircraft **48** produced by exemplary method **46** may include an airframe **64** with a plurality of systems **66** and an interior **68**. The disclosed method and apparatus may be employed to fabricate composite parts that form part of airframe **64** or interior **68**. Examples of high-level systems **66** include one or more of a propulsion system **70,** an electrical system **72,** a hydraulic system **74** and an environmental system **76**. Any number of other systems may be included. Although an aerospace example is shown, the principles of the disclosure may be applied to other industries, such as the automotive industry.

The apparatus embodied herein may be employed during any one or more of the stages of the production and service method **46.** For example, components or subassemblies corresponding to production process **54** may be fabricated or manufactured in a manner similar to components or subassemblies produced while aircraft **48** is in service. Also, one or more apparatus illustrative examples may be utilized during production stages **54** and **56,** for example, by substantially expediting assembly of or reducing the cost of an aircraft **48**. Similarly, one or more apparatus illustrative examples may be utilized while aircraft **48** is in service, for example and without limitation, to maintenance and service **62.**

EXAMPLES

The following examples provide examples of distortional resins. These distortional resins may be examples of number of distortional polymeric resins **1026** of **Figure 10.** In Examples 1-13, computational and experimental techniques are used to identify various distortional resins that may be suitable for use in the fiber-reinforced resin composite **1020** disclosed herein. Example 1 demonstrates the relationship between the molecular structure and composition of an epoxy resin and the value of the von Mises strain of the epoxy resin. Examples 2-11 disclose experimentally determined von Mises strains of various distortional resin compositions. Examples 12-13 disclose von Mises strains determined by quantitative chemical techniques for various distortional resin compositions.

Investigative Methodology.

Using a combination of computer simulation and experimental chemical formulation, a number of epoxy-amine formulations (such as formulations comprising at least one diamine and at least one epoxy resin as disclosed herein) have been identified that exhibit an increase in von Mises strain with respect to many existing commercially available materials.

Computer modeling was performed using molecular dynamics simulations in Materials Studio software suite from Accelrys of San Diego, CA. When using computer modeling, von Mises values were obtained from compressive stress-strain properties derived from molecular dynamics simulations of dendritic polymers produced from each amine-epoxy combination evaluated.

The formulation methodology attempted to improve von Mises strain by selecting chemical structures that contained certain key molecular features and maximized the amount used within the constraints of a production handleable product form. The specific amine structures selected have organic portions that contribute substantially to the overall system distortion. They have been selected for their alternating stiff phenyl rings and rotating sp3 bond hybridization centers such as ether, methylene, isopropyl or sulfone groups that allow the amine moiety to interrogate numerous torsional configurations when subjected to externally applied loads. The conformations considered are specific spatial arrangements of atoms or groups of the molecule inasmuch as the arrangements are determined by a specification of the torsion angles. The epoxy components previously available do not have similar configurations and have historically been selected because they are liquids and as such impart tack for ease of handling to the final formulation.

The measurement of von Mises strain requires fabrication and testing of a composite lamina. The fiber orientation of the test coupon may be set to 10 degrees with respect to the load application direction. The strain at failure as defined by catastrophic fracture may be recorded and analyzed using a commercial Finite Element Analysis code for determination of the maximum value of the principle strains within the body of the specimen at the instant of failure. The principle strains may then be used as input values to the von Mises equation for determination of the critical von Mises strain.

Example 1: Epoxy Resin Structure and von Mises Strain.

Table 2 shows von Mises strain for a series of di-glycidyl epoxies. DEN431 is provided in the table for reference. The results demonstrate that by adding substances to the chain, increased von Mises strain results may occur. For instance, phenyl has a von Mises strain of 0.068, while phenyl-isopropyl-phenyl has a von Mises strain of 0.237, and phenyl-isopropyl-phenyl-isopropyl-phenyl has a von Mises strain of 0.386.

TABLE 2

| Von Mises Strains of Selected Di-glycidyl Epoxy Resins | |
|---|---|
| **Composition** | **Von Mises Strain** |
| phenyl-isopropyl-phenyl | 0.237 |
| phenyl-isopropyl-phenyl-isopropyl-phenyl | 0.386 |
| phenyl-methylene-phenyl | 0.178 |
| phenyl-sulfone-phenyl | 0.223 |

(continued)

| Von Mises Strains of Selected Di-glycidyl Epoxy Resins | |
|---|---|
| **Composition** | **Von Mises Strain** |
| -phenyl- | 0.068 |
| phenyl-sulfide-phenyl | 0.159 |
| phenyl-methyl substit. methyline-phenyl | 0.283 |
| phenyl-isopropyl-phenyl-ether-2hydroxy propyl-ether-phenyl-isopropyl-phenyl | 0.182 |
| DEN 431 - phenyl-methylene-phenyl- | 0.237 |

Examples 2-13: Distortional Resin Compositions of Epoxy and Amine.

A typical prior art composition is SOTA System with IM-7 which testing has shown has a von Mises strain of approximately 0.19, which is a fairly typically von Mises strain result for the prior art compositions. State of the art epoxy resin formulations for composites are usually commercial trade secrets but a typical generic formulation would consist of an epoxy such as MY721 or tetraglycidyl 4,4'-diamino diphenylemthane and 44DDS or 4,4'-diaminodiphenylsulfone mixed in a ratio of about 20 to 40% by weight of amine to epoxy. A typical von Mises strain value for a formulation such as this is in the range of 0.15 to 0.19. All seven of the following compositions disclosed have substantially improved von Mises strain results, as set forth below and set forth in TABLE 3.

Examples 2 and 3.

For instance, experimental results have shown that the composition of DEN431 mixed with 33DDS has a von Mises strain of 0.295 with an amine weight percent content of 28% to 0.345 with an amine weight content of 52%. The 28% formulation represents a 1:1 stoichiometry ratio.

Examples 4 and 5.

Experimental results have shown that the composition of DEN431 mixed with mBAPS has a von Mises strain of 0.322 with an amine weight percent content of 41% to 0.342 with an amine weight content of 65%. The 41% formulation represents a 1:1 stoichiometry ratio.

Examples 6 and 7.

Experimental results have shown that the composition of Tactix123 mixed with 33DDS has a von Mises strain of 0.294 with an amine weight percent content of 27% to 0.345 with an amine weight content of 43%. The 27% formulation represents a 1:1 stoichiometry ratio.

Examples 8 and 9.

Experimental results have shown that the composition of DEN431 mixed with APB133 has a von Mises strain of 0.313 with an amine weight percent content of 32% to 0.37 with an amine weight content of 56%. The 32% formulation represents the 1:1 stoichiometry ratio.

Examples 10 and 11.

Experimental results have shown that the composition of diglycidyl $\alpha$, $\alpha$'-bis(4-hydroxyphenyl)-p-diisopropylbenzene (Bis M) mixed with metaBAPS has a von Mises strain of 0.41 with an amine weight percent content of 24% to 0.42 with an amine weight percent content of 32%. The 32% weight content formulation is the 1:1 stoichiometry mixture.

Example 12.

Computer simulations have shown that the composition of 1,3 bis(4-aminophenoxy)-2, 2 dimethylpropane mixed with Tactix123 epoxy, with a 1:1 stoichiometric ratio of 30% by weight amine with 70% by weight epoxy, has a von Mises strain of 0.31.

Example 13.

Computer simulations have shown that the composition of 1,3 bis(3-aminophenoxy)-2, 2 dimethylpropane mixed with Tactix123 epoxy, with a 1:1 stoichiometric ratio of 30% by weight amine with 70% by weight epoxy, has a von Mises strain of 0.32.

TABLE 3

| | Distortional Resin Compositions | | | | |
|---|---|---|---|---|---|
| Ex. No. | Distortional Resin Composition (Epoxy \| Amine) | Amine wt% | Stoich. Ratio Epoxy: Amine | Von Mises Strain | Method Used to Determine von Mises Strain |
| 2 | DEN431 33DDS | 28% | 1:1 | 0.295 | Experimental |
| 3 | DEN431 33DDS | 52% | - | 0.345 | |
| 4 | DEN 431 mBAPS | 41% | 1:1 | 0.322 | Experimental |
| 5 | DEN 431 mBAPS | 65% | - | 0.342 | |
| | | | | | |
| 6 | Tactix123 epoxy 33DDS | 27% | 1:1 | 0.294 | Experimental |
| 7 | Tactix123 epoxy 33DDS | 43% | - | 0.345 | |
| | | | | | |
| 8 | DEN431 APB133 | 32% | 1:1 | 0.313 | Experimental |
| 9 | DEN431 APB133 | 56% | - | .37 | |
| | | | | | |
| 10 | diglycidyl $\alpha$, $\alpha$'-bis(4-hydroxyphenyl)-p-diisopropylbenzene metaBAPS | 24% | - | 0.41 | Experimental |
| 11 | diglycidyl $\alpha$, $\alpha$'-bis(4-hydroxyphenyl)-p-diisopropyl benzene metaBAPS | 32% | 1:1 | 0.42 | |
| | | | | | |
| 12 | 1,3 bis(4-aminophenoxy)-2, 2 dimethylpropane Tactix123 epoxy | 30% | 1:1 | 0.31 | Computer Simulation |
| | | | | | |

(continued)

| Distortional Resin Compositions | | | | | |
|---|---|---|---|---|---|
| Ex. No. | Distortional Resin Composition (Epoxy \| Amine) | Amine wt% | Stoich. Ratio Epoxy: Amine | Von Mises Strain | Method Used to Determine von Mises Strain |
| 13 | 1,3 bis(3-aminophenoxy)-2, 2 dimethyl propane | 30% | 1:1 | 0.32 | Computer Simulation |
| | Tactix123 epoxy | | | | |

From our testing and computer simulations, the specific compositions which have exhibited improvements in von Mises strain include the following compositions: (1) a DEN431 substance with a 33DDS substance; (2) a DEN 431 substance with a metaBAPS substance; (3) a Tactix123 substance with a 33DDS substance; (4) a DEN431 substance with an APB133 substance; (5) a diglycidyl $\alpha$, $\alpha'$-bis(4-hydroxyphenyl)-p-diisopropylbenzene (Bis M) substance with a metaBAPS substance; (6) a 1,3 bis(4-aminophenoxy)-2, 2 dimethylpropane substance with a Tactix123 substance; and (7) a 1,3 bis(3-aminophenoxy)-2, 2 dimethylpropane substance with a Tactix123 substance.

The DEN431 substance comprises a Bisphenol F based tri-functional novolac epoxy resin. The metaBAPS substance comprises a 4,4' bis(3-aminophenoxy)diphenylsulfone substance. The Tactix123 substance comprises a diglycidyl ether of bisphenol-A substance. The 33DDS substance comprises a 3,3' diaminodiphenylsulfone substance. The APB133 substance comprises a 1,3 bis(3-aminophenoxy)benzene substance. It should be noted that the following substances are epoxies: DEN431; Tactix123; and diglycidyl $\alpha$, $\alpha'$-bis(4-hydroxyphenyl)-p-diisopropylbenzene (Bis M). Similarly, it should be noted that the following substances are amines: 33DDS; metaBAPS; APB133; 1,3 bis(4-aminophenoxy)-2, 2 dimethylpropane; and 1,3 bis(3-aminophenoxy)-2, 2 dimethylpropane.

The molecular basis for a polymer matrix ability to undergo a deviatoric response to an applied force is theorized as due to a cooperative motion of a specific volume or segment of the polymer chain. The molecular motions or dynamics of the polymer structure includes vibrational, bond bending and conformational rearrangement that can be considered as independent processes. The scale of the segmental dynamics may be determined by the local molecular environment, and the number and energy barriers to conformational rearrangements. The local environment may be limited to the scale established by the crosslinks formed during polymerization.

Simulations of these processes indicates that macroscopic loading is manifested at the molecular level as a continual disappearance of a local energy minimum due to the conformational rearrangement followed by relaxation to a new minimum. The potential energy hypersurface that represents the condition describes the glassy material as a distribution of energy minima in phase space, with maxima and saddle points that define the system dynamics. Because strain or deformation is an intensive quantity it is proportional to the fraction of the system involved in the relaxation to a new energy minimum. Therefore more molecular structures which are able to undergo conformational exploration will enhance the polymer's ability to undergo an increased macroscopic distortional response. In addition, based on the intensive nature of deformation, using a volumetric argument for quantifying individual ingredient improvement potential has also been found to be valid.

Both experimental data and computer simulations have indicated that polymer formulations having more backbone rotational conformations and a structure optimized for exploration of dihedral conformations to maximize energy dissipation may exhibit increased distortional deformation capability. Features that may result in distortional polymeric resins include alternating stiff phenyl rings and rotating sp3 bond hybridization centers such as ether, methylene, isopropyl or sulfone groups that allow the molecule to interrogate numerous torsional configurations. On the other hand, dysfunctional epoxies containing linked sp3 centers, such as Tactix177, have not performed as well as the alternating stiff and free rotation configurations. Meta rather than para substitution on the phenyl rings has been qualitatively seen as a means to increase the possible number of potential conformers.

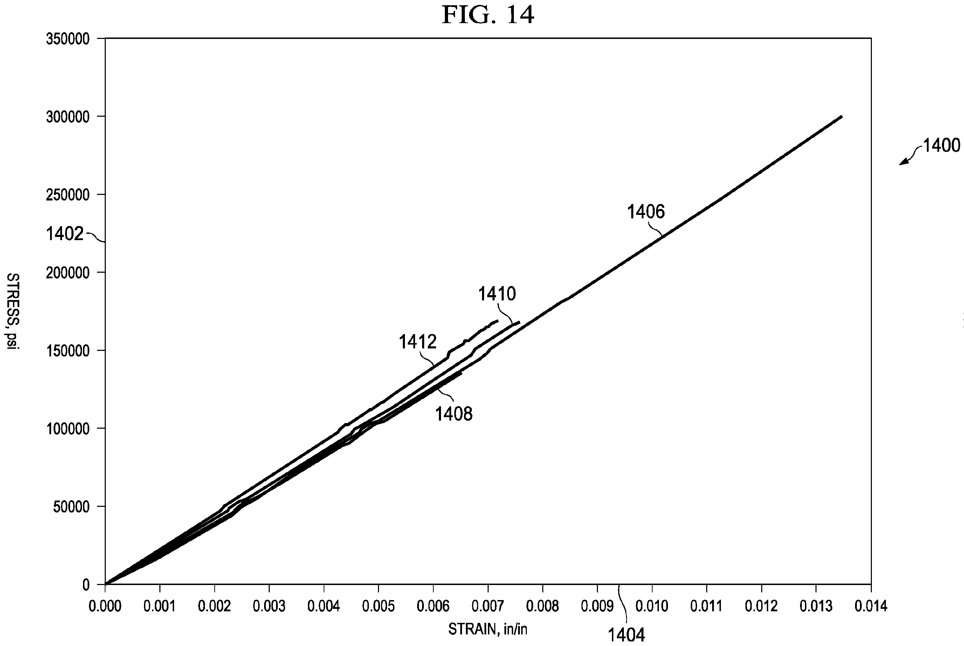

Turning now to **Figure 14,** an illustration of a graph of stress vs. strain behavior for tensile coupons is depicted in accordance with an illustrative embodiment. The coupons each consisted of 8 ply coupons having +10 degrees and -10 degrees orientation. In this illustrative example, all of the fibers are intermediate modulus and high strength. Specifically, all of the fibers in the coupons are IM-7 fibers.

As depicted, graph **1400** comprises stress **1402,** measured in pounds per square inch (psi), and strain **1404,** measured in inches/inches. As depicted, **1406** is a test coupon formed of IM-7/K3B. As depicted, **1408** is a test coupon formed of IM-7/8552. As depicted, **1410** is a test coupon formed of IM-7/5250-4. As depicted, **1412** is a test coupon formed of IM-7/977-3. K3B of **1406** is the only depicted high distortional resin. None of **1408, 1410,** or **1412** include high distortional resins. As can be seen from graph **1400, 1408** fails before strain **1404** of 0.007 in/in. As can be seen from graph **1400, 1410** and **1412** fail at strain **1404** of approximately 0.007 in/in. As can be seen from graph **1400, 1406** continues past strain **1404** of 0.013 in/in.

The test coupon formed of IM-7/K3B **1406** has a greater strength than the other test coupons. In this illustrative example, K3B resin may provide more efficient load transfer between the IM-7 fibers through the resin. The results indicate that increased resin distortion may improve the ability of the composite to share the global load and reach a higher failure load.

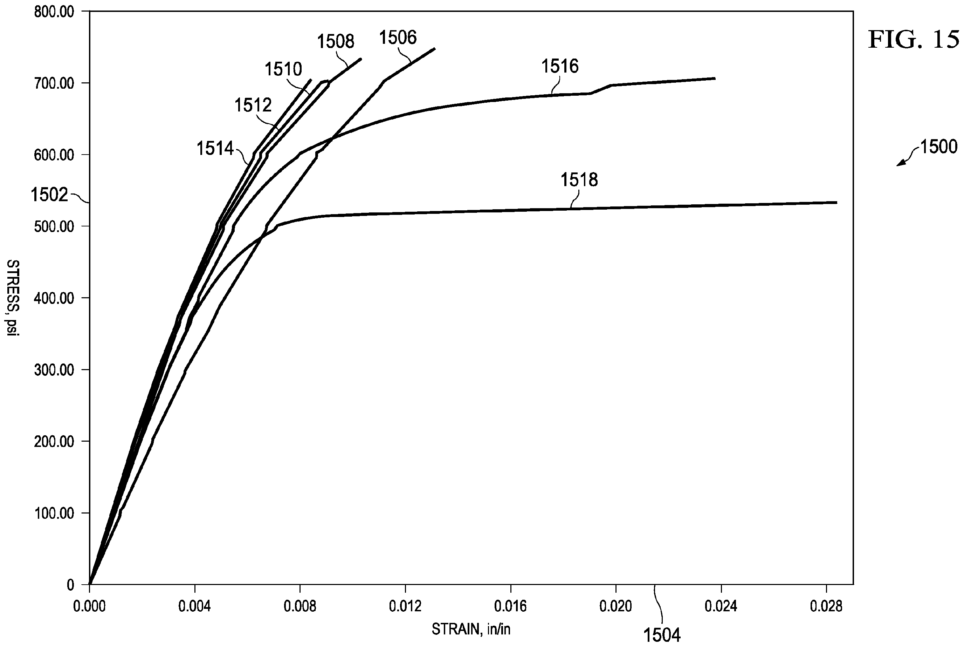

Turning now to **Figure 15,** an illustration of a graph of stress vs. strain behavior for tensile coupons is depicted in accordance with an illustrative embodiment. As depicted, graph **1500** comprises stress **1502,** measured in pounds per square inch (psi), and strain **1504,** measured in inches/inches. As depicted, **1506** is a test coupon formed of IM-7/5250-4, **1508** is a test coupon formed of T800H/3900-2, **1510** is a test coupon formed of IM-7/977-3, **1512** is a test coupon formed of T800S/3900-2, **1514** is a test coupon formed of IM-7/8552. As depicted, **1516** is a test coupon formed of IM-7/K3B, and **1518** is a test coupon formed of a mixture of Bisphenol-A and -M epoxy with APB133 amine. As a result, only **1516** and **1518** are test coupons formed with high distortional resins.

As can be seen from **Figure 15,** test coupon **1506,** test coupon **1508,** test coupon **1510,** test coupon **1512,** and test coupon **1514** behave similarly. Each of test coupon **1506,** test coupon **1508,** test coupon **1510,** test coupon **1512,** and test coupon **1514** rises quickly and fails at its peak. None of test coupon **1506,** test coupon **1508,** test coupon **1510,** test coupon **1512,** or test coupon **1514** continue past strain **1504** of 0.012 in/in. In contrast, test coupon **1516** and test coupon **1518** have two rates of increase. The first rate of increase can be seen until strain **1504** of about 0.008 in/in. The second rate of increase occurs after strain **1504** of about 0.008 in/in and continues past strain **1504** of at least 0.022 in/in.

As can be seen from **Figure 15,** high distortional resins may allow composites to reach higher strains. In one theory, failure of test coupon **1516** and test coupon **1518** after strain **1504** of about 0.008 in/in may occur due to mostly resin failure.

In various illustrative examples, a fiber-reinforced resin composite comprises a polymeric resin matrix, reinforcing fibers held in the polymeric resin matrix, and a coating on the reinforcing fibers for improving load transfer between the reinforcing fibers and the polymeric resin matrix. The coating includes a first polymeric resin having a first distortional deformation capability greater than a distortional deformation capability of the polymeric resin matrix. The coating may include a first layer of the first polymeric resin and a second layer of a second polymeric resin, wherein the first distortional deformation capability of the first polymeric resin is different from a second distortional deformation capability of the second polymeric resin, and wherein the first distortional deformation capability and the second distortional deformation capability are each greater than the distortional deformation capability of the polymeric resin matrix. The fiber-reinforced resin composite may be formed by impregnating the reinforcing fibers with a bulk matrix resin, and forming the polymeric resin matrix from the bulk matrix resin. The reinforcing fibers may include at least two groups of fibers, wherein the at least two groups of fibers includes a first group of fibers and a second group of fibers. A stiffness of the first group of fibers may be different than a stiffness of the second group of fibers. A strength of the first group of fibers may be different than a strength of the second group of fibers.

In various illustrative examples, a composite is provided, wherein reinforcing fibers in the composite are coated with a polymeric resin having a relatively high distortional deformation capability compared to a distortional deformation capability of a polymeric resin matrix of the composite. The coating may create an energy dissipative, distortional interphase region surrounding the reinforcing fibers that improves resin-fiber load transfer across fiber discontinuities and/or defects, thereby improving mechanical properties of the composite. A process of coating the reinforcing fibers with the polymeric resin having the relatively high distortional deformation capability compared to the distortional deformation capability of the polymeric resin matrix may be performed prior to an impregnation of the reinforcing fibers with a bulk matrix resin from which the polymeric resin matrix is formed, thus allowing current commercially available reinforcing fibers to be utilized in existing prepreg production processes. By providing the reinforcing fibers of the composite with the coating of the polymeric resin having the relatively high distortional deformation capability compared to the distortional deformation capability of the polymeric resin matrix, the composite may have improved mechanical performance, such as increased strength and/or strain, as well as potential improvements in delamination. Composite structures employing reinforcing fibers coated with high distortional resins may result in optimized composite designs that may reduce weight and cost.

According to a further illustrative example, a fiber-reinforced resin composite comprises a polymeric resin matrix, reinforcing fibers held in the polymeric resin matrix, and a distortional interphase region having a high distortional deformation capability relative to the resin matrix. The distortional interphase region may be defined by at least a first polymeric resin coating on the reinforcing fibers. The distortional interphase region may be defined by a second polymeric resin coating over the first polymeric resin coating. The first polymeric resin coating may be a high temperature resin.

The following are nonlimiting, specific illustrative examples in accordance with the present disclosure:

A first illustrative example, which is a method of making a fiber reinforced polymer resin comprising coating reinforcing fibers with a first polymeric resin to form coated fibers; and embedding the coated fibers in a second polymeric resin, wherein a first distortional deformation capability of the first polymeric resin is greater than a second distortional deformation capability of the second polymeric resin.

A second illustrative example, which is the method of the first illustrative example wherein a first modulus of the reinforcing fibers is higher than a second modulus of the first polymeric resin.

A third illustrative example, which is the method of any of the first and second illustrative examples, further comprising selecting the reinforcing fibers from the group consisting of carbon fibers, glass fibers, organic fibers, metallic fibers, and ceramic fibers.

A fourth illustrative example, which is the method of any of the first through third illustrative examples further comprising applying a coating of a third polymeric resin over a coating of the first polymeric resin, wherein a third distortional deformation capability of the third polymeric resin is greater than the first distortional deformation capability and the second distortional deformation capability.

A fifth illustrative example, which is a method for making a fiber reinforced polymer composite, comprising forming a polymeric resin matrix; providing fibers for reinforcing the polymeric resin matrix; embedding the fibers in the polymeric resin matrix; and forming a distortional interphase region between the fibers and the polymeric resin matrix for improving load transfer between the fibers and the polymeric resin matrix.

A sixth illustrative example, which is the method of the fifth illustrative example wherein forming the distortional interphase region includes coating the fibers with a polymeric distortional resin having at least one property different from that of the polymeric resin matrix.

A seventh illustrative example, which is the method of any of the fifth and sixth illustrative examples wherein the at least one property is selected from the group consisting of fluid resistance, increased modulus, high temperature performance, processability, and handling properties.

An eighth illustrative example, which is the method of any of the fifth through seventh illustrative examples wherein embedding the fibers in the polymeric resin matrix includes impregnating the fibers with the polymeric resin matrix, and curing the polymeric resin matrix.

A ninth illustrative example, which is the method of any of the fifth through eighth illustrative examples wherein providing fibers includes selecting the fibers from the group consisting of carbon fibers, glass fibers, organic fibers, metallic fibers, and ceramic fibers.

A tenth illustrative example, which is the method of any of the fifth through ninth illustrative examples wherein providing fibers for reinforcing the resin matrix includes providing a first group of fibers and a second group of fibers, wherein a first modulus of the first group of fibers is different than a second modulus of the second group of fibers; and forming the distortional interphase region between the fibers and the polymeric resin matrix includes coating the first group of fibers with a first polymeric resin and coating the second group of fibers with a second polymeric resin, wherein each of a first distortional deformation capability of the first polymeric resin and a second distortional deformation capability of the second polymeric resin is higher than a third distortional deformation capability of the polymeric resin matrix.

An eleventh illustrative example, which is the method of any of the fifth through tenth illustrative examples wherein forming the interphase region includes coating the fibers with a polymeric distortional resin having a first distortional deformation capability greater than a second distortional deformation capability of the polymeric resin matrix, and embedding the fibers in the polymeric resin matrix includes using the coated fibers to form fiber preform **1027** and infusing fiber preform **1027** with the polymeric resin matrix.

A twelfth illustrative example, which is a fiber-reinforced resin composite having improved distortional deformation capability, comprising a polymeric resin matrix; reinforcing fibers held in the matrix; and a coating on the fibers for improving load transfer between the fibers and the matrix.

A thirteenth illustrative example, which is the fiber-reinforced resin composite of the twelve illustrative example wherein the coating includes a polymeric resin having a distortional deformation capability greater than that of the resin matrix.

A fourteenth illustrative example, which is the fiber-reinforced resin composite of any of the twelfth and thirteenth illustrative examples wherein the coating includes first and seconds layers of polymeric resin respectively having differing distortional deformation capabilities each greater than the distortional deformation capability of the resin matrix.

A fifteenth illustrative example, which is the fiber-reinforced resin composite of any of the twelfth through fourteenth illustrative examples wherein the fibers are impregnated with the matrix resin.

A sixteenth illustrative example, which is the fiber-reinforced resin composite of any of the twelve through fifteenth illustrative examples wherein the fibers include at least two groups thereof respectively having differing stiffnesses or strengths.

A seventeenth illustrative example, which is the fiber-reinforced resin composite of any of the twelfth through sixteenth illustrative examples wherein the fibers are selected from the group consisting of carbon fibers, glass fibers, organic fibers, metallic fibers, and ceramic fibers.

An eighteenth illustrative example, which is a fiber-reinforced resin composite comprising a polymeric resin matrix; reinforcing fibers held in the matrix; and an interphase region surrounding the fibers having a high distortional deformation capability relative to that of the resin matrix.

A nineteenth illustrative example, which is the fiber-reinforced resin composite of the eighteenth illustrative example wherein the interphase region is defined by at least a first polymeric resin coating on the fibers.

A twentieth illustrative example, which is the fiber-reinforced resin composite of any of the eighteenth and nineteenth illustrative examples wherein the interphase region is defined by a second polymeric resin coating over the first polymeric coating.

A twenty-first illustrative example, which is the fiber-reinforced resin composite of any of the eighteenth through twentieth illustrative examples wherein the first polymeric resin coating is a high temperature resin.

A twenty-second illustrative example, which is a method of making a fiber reinforced resin composite exhibiting improved strength, comprising providing a first group of reinforcing fibers and a second group of reinforcing fibers, wherein each of the first group of reinforcing fibers and the second group of reinforcing fibers is selected from the group consisting of carbon fibers, glass fiber, organic, metallic and ceramic fibers; forming coated fibers by applying at least one coating of a first polymeric resin having a first distortional deformation capability on each of the reinforcing fibers in the first group of reinforcing fibers and applying at least one coating of a second polymeric resin having a second distortional deformation capability on each of the reinforcing fibers in the second group of reinforcing fibers, wherein the first polymeric resin has one or more properties that are different than the properties of the second polymeric resin; forming impregnated, coated fibers by impregnating the coated fibers with a third polymeric resin having a third distortional deformation capability that is less than each of the first distortional deformation capability and the second distortional deformation capability; and curing the impregnated, coated fibers to form a substantially homogeneous resin matrix having the impregnated, coated fibers embedded therein, wherein an interphase region is present between the reinforcing fibers of the first and the second groups of the reinforcing fibers and the substantially homogeneous resin matrix that improves load transfer between the reinforcing of the first and the second groups of the reinforcing fibers and the substantially homogeneous resin matrix.

The twenty-third illustrative example, which is a fiber-reinforced resin composite comprising at least two groups of reinforcing fibers respectively having differing fiber characteristics, wherein each of the groups includes one of carbon fibers, glass fibers, organic fibers, metallic fibers and ceramic fibers; a coating of a first polymeric resin on the fibers in the first group; a coating of a second polymeric resin on the fibers in the second group; a polymeric resin matrix for holding the first and second groups of fibers and having a distortional deformation capability less than that of the first and second polymeric resins, the coatings of on the fibers forming an interphase region for improving load transfer between the fibers and the matrix.

A twenty-fourth illustrative example, which is a fiber-reinforced resin composite comprising a polymeric resin matrix; and a plurality of fibers coated with a first polymeric resin having a first von Mises strain of greater than or equal to approximately 0.25 and disposed in the polymeric resin matrix, wherein a distortional deformation capability of the first polymeric resin is greater than a distortional deformation capability of the polymeric resin matrix.

A twenty-fifth illustrative example, which is the fiber-reinforced resin composite of the twenty-fourth illustrative example wherein the first von Mises strain is greater than or equal to approximately 0.30.

A twenty-sixth illustrative example, which is the fiber-reinforced resin composite of any of the twenty-fourth and twenty-fifth illustrative examples wherein the first von Mises strain is greater than or equal to approximately 0.40.

A twenty-seventh illustrative example, which is the fiber-reinforced resin composite of any of the twenty-fourth through twenty-sixth illustrative examples wherein the polymeric resin matrix has a second von Mises strain of less than approximately 0.25.

A twenty-eighth illustrative example, which is the fiber-reinforced resin composite of any of the twenty-fourth through twenty-seventh illustrative examples wherein the second von Mises strain is in a range of from approximately 0.18 to approximately 0.24.

A twenty-ninth illustrative example, which is the fiber-reinforced resin composite of any of the twenty-fourth through twenty-eighth illustrative examples wherein the polymeric resin matrix comprises a cured epoxy resin comprising an epoxy and amine monomers.

A thirtieth illustrative example, which is the fiber-reinforced resin composite of any of the twenty-fifth through twenty-ninth illustrative examples wherein the epoxy comprises at least one of a bisphenol A epoxy resin or a bisphenol F epoxy resin, and the amine monomers comprise diaminodiphenylsulfone monomers.

A thirty-first illustrative example, which is the fiber-reinforced resin composite of any of the twenty-fifth through thirtieth illustrative examples wherein the first polymeric resin comprises at least one of the following groups (A) bisphenol F based tri-functional novolac epoxy resin and 4,4' bis(3-aminophenoxy) diphenylsulfone; (B) bisphenol F based tri-functional novolac epoxy resin and 3,3' diamino diphenylsulfone; (C) bisphenol F based tri-functional novolac epoxy resin and 1,3 bis(3-aminophenoxy) benzene; (D) diglycidyl $\alpha$, $\alpha$'-bis(4-hydroxyphenyl)-p-diisopropylbenzene and 4,4' bis(3-aminophenoxy) diphenylsulfone; (E) 1,3 bis(4-aminophenoxy)-2,2 dimethylpropane and diglycidyl ether of bisphenol-A; (F) diglycidyl ether of bisphenol-A and 3,3' diaminodiphenylsulfone; or (G) 1,3 bis(3-aminophenoxy)-2,2 dimethylpropane and diglycidyl ether of bisphenol-A.

A thirty-second illustrative example, which is the fiber-reinforced resin composite of any of the twenty-fifth through thirty-first illustrative examples wherein the plurality of fibers comprises at least one of carbon fibers, glass fibers, organic fibers, metallic fibers, or ceramic fibers.

A thirty-third illustrative example, which is the fiber-reinforced resin composite of any of the twenty-fifth through thirty-second illustrative examples wherein the plurality of fibers comprises at least one of first fibers having a first modulus of elasticity in a range of from approximately 33 msi to approximately 36 msi, second fibers having a second modulus of elasticity in a range of from approximately 40 msi to approximately 45 msi, or third fibers having a third modulus of elasticity of greater than approximately 45 msi.

A thirty-fourth illustrative example, which is the fiber-reinforced resin composite of any the twenty-fifth through thirty-third illustrative examples wherein the plurality of fibers comprises the first fibers and the third fibers.

A thirty-fifth illustrative example, which is the fiber-reinforced resin composite of any of the twenty-fifth through thirty-fourth illustrative examples wherein the plurality of fibers comprises the second fibers and the third fibers.

A thirty-sixth illustrative example, which is the fiber-reinforced resin composite of any of the twenty-fifth through thirty-fifth illustrative examples wherein the plurality of fibers coated with the first polymeric resin are a fiber preform **1027** impregnated with the polymeric resin matrix.

A thirty-seventh illustrative example, which is the fiber-reinforced resin composite of any of the twenty-fifth through thirty-sixth illustrative examples wherein a value of a property for the polymeric resin matrix is greater than a value of the property for the first polymeric resin, and wherein the property comprises a modulus of elasticity, a glass transition temperature, a fluid resistance, or a tack life.

A thirty-eighth illustrative example, which is the fiber-reinforced resin composite any of the twenty-fifth through thirty-seventh embodiments wherein a value of the property for the fiber-reinforced resin composite is greater than the value of the property for the first polymeric resin and less than or equal to the value for the polymeric resin matrix.

A thirty-ninth embodiment, which is the fiber-reinforced resin composite of any of the twenty-fifth through thirty-eighth illustrative examples further comprising a distortional resin coating having a first layer comprising the first polymeric resin and a second layer comprising a second polymeric resin, wherein the second layer covers the first layer, the first layer is disposed between the plurality of fibers and the second layer, and the second polymeric resin has a third von Mises strain of greater than or equal to approximately 0.25.

A fortieth illustrative example, which is the fiber-reinforced resin composite of any of the twenty-fifth through thirty-ninth illustrative examples wherein the third von Mises strain is greater than the first von Mises strain and the second von Mises strain.

A forty-first illustrative example, which is the fiber-reinforced resin composite of any of the twenty-fifth through fortieth illustrative examples further comprising an interphase region disposed between the fibers and the polymeric resin matrix, wherein the interphase region comprises the first polymeric resin.

A forty-second illustrative example, which is a fiber-reinforced resin composite, comprising a polymeric resin matrix having a first von Mises strain; fibers disposed in the polymeric resin matrix; and an interphase region surrounding the fibers having a second von Mises strain, wherein a ratio of the first von Mises strain to the second von Mises strain is greater than or equal to approximately 1.04.

The forty-third illustrative example, which is the fiber-reinforced resin composite of the forty-second illustrative example wherein the interphase region is defined by at least a first polymeric resin coating on the fibers.

A forty-fourth illustrative example, which is the fiber-reinforced resin composite of any of the forty-second and forty-third illustrative examples wherein the ratio of the first von Mises strain to the second von Mises strain is greater than or equal to approximately 1.25.

The forty-fifth illustrative example, which is the fiber-reinforced resin composite of any of the forty-second through forty-fourth illustrative examples wherein the ratio of the first von Mises strain to the second von Mises strain is greater than or equal to approximately 1.63.

A forty-sixth illustrative example, which is a method of making a fiber-reinforced resin composite, comprising embedding fibers coated with a first polymeric resin in a polymeric resin matrix, wherein a first von Mises strain of the first polymeric resin in a cured state is greater than or equal to approximately 0.25.

A forty-seventh illustrative example, which is the method of making the fiber-reinforced resin composite of the forty-sixth illustrative example further comprising forming the fibers coated with the first polymeric resin, wherein forming the fibers coated with the first polymeric resin comprises coating the fibers with the first polymeric resin.

A forty-eighth illustrative example, which is the method of making the fiber-reinforced resin composite of any one of the forty-sixth and forty-seventh illustrative examples wherein a value of a property for the polymeric resin matrix is greater than a value of the property for the first polymeric resin, and wherein the property comprises a modulus of elasticity, a glass transition temperature, a fluid resistance, or a tack life.

A forty-ninth illustrative example, which is the method of making the fiber-reinforced resin composite of any of the forty-sixth through forty-eighth illustrative examples wherein a value of the property for the fiber-reinforced resin composite is greater than the value of the property for the first polymeric resin and less than or equal to the value for the polymeric resin matrix.

A fiftieth illustrative example, which is the method of making the fiber-reinforced resin composite of any of the forty-sixth through forty-ninth illustrative examples wherein the polymeric resin matrix has a second von Mises strain in a range of from approximately 0.18 to approximately 0.24.

A fifty-first illustrative example, which is the method of making the fiber-reinforced resin composite of any of the forty-sixth through fiftieth illustrative examples wherein the first von Mises strain of the first polymeric resin in a cured state is greater than or equal to approximately 0.30.

A fifty-second illustrative example, which is the method of making the fiber-reinforced resin composite of any of the forty-sixth through fifty-first illustrative examples wherein the first von Mises strain of the first polymeric resin in a cured state is greater than or equal to approximately 0.40.

A fifty-third illustrative example, which is the method of making the fiber-reinforced resin composite any of the forty-sixth through fifty-second illustrative examples further comprising coating the fibers coated with the first polymeric resin with a second polymeric resin having a third von Mises strain, wherein the third von Mises strain is greater than the first von Mises strain and the second von Mises Strain.

A fifty-fourth illustrative example, which is the method of making the fiber-reinforced resin composite of any of the forty-sixth through fifty-third illustrative examples further comprising forming a distortional interphase region between the fibers and the polymeric resin matrix.

A fifty-fifth illustrative example, which is the method of making the fiber-reinforced resin composite of any of the forty-sixth through fifty-fourth illustrative examples wherein embedding the fibers coated with the first polymeric resin in the polymeric resin matrix comprises impregnating the fibers coated with the first polymeric resin with an uncured resinous matrix material; and curing the first polymeric resin and the uncured resinous matrix material, wherein curing forms the polymeric resin matrix from the uncured resinous matrix material.

A fifty-sixth illustrative example, which is the method of making the fiber-reinforced resin composite of any of the forty-sixth through fifty-fifth illustrative examples wherein curing the first polymeric resin and the uncured resinous matrix material forms a distortional interphase region, and wherein forming the distortional interphase region comprises reacting the first polymeric resin with chemical functional groups of at least one of the fibers, the uncured matrix material, or the polymeric resin matrix.

A fifty-seventh illustrative example, which is the method of making the fiber-reinforced resin composite any of the forty-sixth through fifty-six illustrative examples further comprising forming a fiber preform **1027** comprising the fibers coated with the first polymeric resin, and wherein impregnating the fibers coated with the first polymeric resin with the uncured resinous matrix material comprises impregnating the fiber preform **1027** with the uncured resinous matrix material.

A fifty-eighth illustrative example, which is the method of making the fiber-reinforced resin composite of any of the forty-sixth through fifty-seventh illustrative examples wherein forming the polymeric resin matrix comprises reacting the uncured resinous matrix material with a curing agent.

A fifty-ninth illustrative example, which is the method of making the fiber-reinforced resin composite of any of the forty-sixth through fifty-eighth illustrative examples wherein the uncured resinous matrix material comprises at least one of a bisphenol A epoxy resin or a bisphenol F epoxy resin, and the curing agent comprises diaminodiphenylsulfone.

A sixtieth illustrative example, which is the method of making the fiber-reinforced resin composite any of the forty-sixth through fifty-ninth illustrative examples wherein the first polymeric resin comprises at least one of the following groups (A) bisphenol F based tri-functional novolac epoxy resin and 4,4' bis(3-aminophenoxy) diphenylsulfone; (B) bisphenol F based tri-functional novolac epoxy resin and 3,3' diamino diphenylsulfone; (C) bisphenol F based tri-functional novolac epoxy resin and 1,3 bis(3-aminophenoxy) benzene; (D) diglycidyl $\alpha, \alpha$'-bis(4-hydroxyphenyl)-p-diisopropylbenzene and 4,4' bis(3-aminophenoxy) diphenylsulfone; (E) 1,3 bis(4-aminophenoxy)-2,2 dimethylpropane and diglycidyl ether of bisphenol-A; (F) diglycidyl ether of bisphenol-A and 3,3' diaminodiphenylsulfone; or (G) 1,3 bis(3-aminophenoxy)-2,2 dimethylpropane and diglycidyl ether of bisphenol-A.

A sixty-first illustrative example, which is the method of making the fiber-reinforced resin composite of any of the forty-sixth through sixtieth illustrative examples wherein the fibers comprise at least one of carbon fibers, glass fibers, organic fibers, metallic fibers, or ceramic fibers.

A sixty-second illustrative example, which is the method of making the fiber-reinforced resin composite of any of the forty-sixth through sixty-first illustrative examples wherein the fibers comprise at least one of first fibers having a first modulus of elasticity in a range of from approximately 33 msi to approximately 36 msi, second fibers having a second modulus of elasticity in a range of from approximately 40 msi to approximately 45 msi, or third fibers having a third modulus of elasticity of greater than approximately 45 msi.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

**Claims**

1. A fiber-reinforced resin composite (1020), comprising:

   a polymeric resin matrix (1022) having a first von Mises strain;
   a plurality of fibers (1024) coated with a first distortional polymeric resin (1029), the first distortional polymeric resin (1029) having a second von Mises strain in a range of 0.25 to 0.45 and disposed in the polymeric resin matrix, in which the second von Mises strain is greater than the first von Mises strain; and
   a distortional interphase region (1028) disposed between the plurality of fibers (1024) and the polymeric resin matrix (1022), wherein the distortional interphase region comprises the first distortional polymeric resin (1029), wherein chemical functional groups of at least one of the plurality of fibers (1024), and the polymeric resin matrix (1022) are reacted with the first distortional polymeric resin (1029).

2. The fiber-reinforced resin composite of claim 1, wherein the second von Mises strain is in a range of 0.30 to 0.45, and wherein the first von Mises strain is in a range of from 0.18 to 0.24.

3. The fiber-reinforced resin composite of claim 1 or 2, wherein the first distortional polymeric resin comprises at least one of the following groups:

   (A) bisphenol F based tri-functional novolac epoxy resin and 4,4' bis(3-aminophenoxy) diphenylsulfone;
   (B) bisphenol F based tri-functional novolac epoxy resin and 3,3' diamino diphenylsulfone;
   (C) bisphenol F based tri-functional novolac epoxy resin and 1,3 bis(3-aminophenoxy) benzene;
   (D) diglycidyl $\alpha$, $\alpha$'-bis(4-hydroxyphenyl)-p-diisopropylbenzene and 4,4' bis(3-aminophenoxy) diphenylsulfone;
   (E) diglycidyl ether of bisphenol-A and 1,3 bis(4-aminophenoxy)-2,2 dimethylpropane;
   (F) diglycidyl ether of bisphenol-A and 3,3' diaminodiphenylsulfone; or
   (G) diglycidyl ether of bisphenol-A and 1,3 bis(3-aminophenoxy)-2,2 dimethylpropane.

4. The fiber-reinforced resin composite of any preceding claim, wherein the plurality of fibers comprises at least one of carbon fibers, glass fibers, organic fibers, metallic fibers, or ceramic fibers, and wherein the plurality of fibers comprises at least one of low modulus fibers (1050) having a first modulus of elasticity in a range of from 33 msi to 36 msi, intermediate modulus fibers (1052) having a second modulus of elasticity in a range of from 40 msi to 45 msi, or high modulus fibers (1054) having a third modulus of elasticity in a range from 45 msi to 85 msi.

5. The fiber-reinforced resin composite of any preceding claim, wherein a value of a property for the polymeric resin matrix is greater than a value of the property for the first distortional polymeric resin, and wherein the property comprises at least one of a modulus of elasticity, a glass transition temperature, a fluid resistance, or a tack life.

6. The fiber-reinforced resin composite of any preceding claim, further comprising a distortional resin coating (1030) having a first layer (1037) comprising the first distortional polymeric resin and a second layer (1039) comprising a second distortional polymeric resin (1031), wherein the second layer covers the first layer and wherein the second distortional polymeric resin has a third von Mises strain in a range of 0.25 to 0.45, wherein the third von Mises strain is greater than the first von Mises strain and the second von Mises strain.

7. A method of making a fiber-reinforced resin composite (1020), the method comprising:

   embedding (1140) a plurality of fibers (1024) coated with a first distortional polymeric resin (1029) in a polymeric resin matrix (1022), wherein a second von Mises strain of the first distortional polymeric resin in a cured state is in a range of 0.25 to 0.45, and in which a first von Mises strain of the polymeric resin matrix is less than the second von Mises strain; and
   forming (1170) a distortional interphase region (1028) between the plurality of fibers (1024) and the polymeric resin matrix (1022),
   wherein embedding the plurality of fibers (1024) coated with the first distortional polymeric resin (1029) in the polymeric resin matrix (1022) comprises:

impregnating (1150) the plurality of fibers (1024) coated with the first distortional polymeric resin (1029) with an uncured resinous matrix material; and

curing (1160) the first distortional polymeric resin (1029) and the uncured resinous matrix material, wherein curing the first distortional polymeric resin (1029) and the uncured resinous matrix material forms the distortional interphase region, and wherein forming the distortional interphase region comprises reacting the first distortional polymeric resin (1029) with chemical functional groups of at least one of the plurality of fibers (1024) and the uncured resinous matrix material, wherein curing forms the polymeric resin matrix (1022) from the uncured resinous matrix material, wherein forming the polymeric resin matrix (1022) comprises reacting the uncured resinous matrix material with a curing agent.

8. The method of claim 7, wherein the second von Mises strain of the first distortional polymeric resin in the cured state is in a range of 0.30 to 0.45.

9. The method of claim 7 or 8, wherein a value of a property for the polymeric resin matrix is greater than a value of the property for the first distortional polymeric resin, and wherein the property comprises at least one of a modulus of elasticity, a glass transition temperature, a fluid resistance, or a tack life.

10. The method of any of claims 7 to 9, further comprising:
coating the plurality of fibers coated with the first distortional polymeric resin with a second distortional polymeric resin (1031) having a third von Mises strain, wherein the third von Mises strain is greater than the first von Mises strain and the second von Mises strain.

11. The method of claim 10, further comprising:
forming a fiber preform (1027) comprising the plurality of fibers coated with the first distortional polymeric resin, and wherein impregnating the plurality of fibers coated with the first distortional polymeric resin with the uncured resinous matrix material comprises impregnating the fiber preform with the uncured resinous matrix material.

12. The method of any of claims 7 to 11, wherein the first distortional polymeric resin comprises at least one of the following groups:

(A) bisphenol F based tri-functional novolac epoxy resin and 4,4' bis(3-aminophenoxy) diphenylsulfone;
(B) bisphenol F based tri-functional novolac epoxy resin and 3,3' diamino diphenylsulfone;
(C) bisphenol F based tri-functional novolac epoxy resin and 1,3 bis(3-aminophenoxy) benzene;
(D) diglycidyl $\alpha, \alpha'$-bis(4-hydroxyphenyl)-p-diisopropylbenzene and 4,4' bis(3-aminophenoxy) diphenylsulfone;
(E) diglycidyl ether of bisphenol-A and 1,3 bis(4-aminophenoxy)-2,2 dimethylpropane;
(F) diglycidyl ether of bisphenol-A and 3,3' diaminodiphenylsulfone; or
(G) diglycidyl ether of bisphenol-A and 1,3 bis(3-aminophenoxy)-2,2 dimethylpropane.

**Patentansprüche**

1. Faserverstärkter Harzverbundwerkstoff (1020), mit:
einer Polymerharzmatrix (1022), die eine erste von Mises-Spannung aufweist;

einer Mehrzahl von Fasern (1024), die mit einem ersten Distorsionspolymerharz (1029) beschichtet sind, wobei das erste Distorsionspolymerharz (1029) eine zweite von Mises-Spannung in einem Bereich von 0,25 bis 0,45 aufweist und in der Polymerharzmatrix angeordnet ist, in der die zweite von Mises-Spannung größer als die erste von Mises-Spannung ist; und
einer Distorsionsinterphasenregion (1028), die zwischen der Mehrzahl von Fasern (1024) und der Polymerharzmatrix (1022) angeordnet ist, wobei die Distorsionsinterphasenregion den ersten Distorsionspolymerharz (1029) aufweist,
wobei chemische funktionale Gruppen von zumindest einer der Mehrzahl von Fasern (1024) sowie die Polymerharzmatrix (1022) mit dem ersten Distorsionspolymerharz (1029) reagiert sind.

2. Faserverstärkter Harzverbundwerkstoff nach Anspruch 1, wobei die zweite von Mises-Spannung in einem Bereich von 0,3 bis 0,45 ist, und wobei die erste von Mises-Spannung in einem Bereich von 0,18 bis 0,24 ist.

3. Faserverstärkter Harzverbundwerkstoff nach Anspruch 1 oder 2, wobei der erste Distorsionspolymerharz mindestens eine der vorliegenden Gruppen aufweist:

(A) Bisphenol F basiertes trifunktionales Novolack-Epoxidharz und 4,4'-Bis(3-aminophenoxy)diphenylsulfon;
(B) Bisphenol F basiertes trifunktionales Novolack-Epoxidharz und 3,3'-Diaminodiphenylsulfon;
(C) Bisphenol F basiertes trifunktionales Novolack-Epoxidharz und 1,3-Bis(3-aminophenoxy)benzen;
(D) Diglycidyl a, a'-Bis(4-hydroxyphenyl)-p-diisopropylbenzol und 4,4' Bis(3-aminophenoxy)diphenylsulfon;
(E) Bisphenol-A-diglycidylether und 1,3-Bis(4-aminophenoxy)-2,2 dimethylpropan;
(F) Bisphenol-A-diglycidylether und 3,3'-Diaminodiphenylsulfon; oder
(G) Bisphenol-A-diglycidylether und 1,3-Bis(3-aminophenoxy)-2,2 dimethylpropan.

4. Faserverstärkter Harzverbundwerkstoff nach einem der voranstehenden Ansprüche, wobei die Mehrzahl von Fasern mindestens eines von Karbonfasern, Glasfasern, organischen Fasern, Metallfasern oder Keramikfasern aufweist, und wobei die Mehrzahl von Fasern mindestens eines von Niedrigmodul-Fasern (1050), die ein erstes Elastizitätsmodul in einem Bereich von 33 msi bis 36 msi aufweisen, Mittelmodulfasern (1052), die ein zweites Elastizitätsmodul in einem Bereich von 40 msi bis 45 msi aufweisen, oder Hochmodulfasern (1054) aufweisen, die ein drittes Elastizitätsmodul in einem Bereich von 45 msi bis 85 msi aufweisen.

5. Faserverstärkter Harzverbundwerkstoff nach einem der voranstehenden Ansprüche, wobei ein Wert einer Eigenschaft für die Polymerharzmatrix größer als ein Wert der Eigenschaft für das erste Distorsionspolymerharz ist, und wobei die Eigenschaft eines von einem Elastizitätsmodul, einer Glasübergangstemperatur, einem Fluidwiderstand oder einer Klebrigkeitsdauer ist.

6. Faserverstärkter Harzverbundwerkstoff nach einem der voranstehenden Ansprüche, des Weiteren mit einer Distorsionsharzbeschichtung (1030), die eine erste Schicht (1037) aufweist, die das erste Distorsionspolymerharz aufweist und eine zweite Schicht (1039) aufweist, die ein zweites Distorsionspolymerharz (1031) aufweist, wobei die zweite Schicht die erste Schicht abdeckt und wobei das zweite Distorsionspolymerharz eine dritte von Mises-Spannung im Bereich von 0,25 bis 0,45 aufweist, wobei die dritte von Mises-Spannung größer als die erste von Mises-Spannung und die zweite von Mises-Spannung ist.

7. Verfahren zum Herstellen eines faserverstärkten Harzverbundwerkstoffs (1020), wobei das Verfahren Folgendes aufweist:

Einbetten (1140) einer Mehrzahl von Fasern (1024), die mit einem ersten Distorsionspolymerharz (1029) beschichtet sind in eine Polymerharzmatrix (1022), wobei eine zweite von Mises-Spannung des ersten Distorsionspolymerharzes in einem ausgehärteten Zustand in einem Bereich von 0,25 bis 0,45 ist, und wobei eine von Mises-Spannung der Polymerharzmatrix geringer als die zweite von Mises-Spannung ist; und
Ausbilden (1170) eines Distorsionsinterphasenbereichs (1028) zwischen der Mehrzahl von Fasern (1024) und der Polymerharzmatrix (1022),
wobei das Einbetten der Mehrzahl von Fasern (1024), die mit dem ersten Distorsionspolymerharz (1029) beschichtet sind, in die Polymerharzmatrix (1022) Folgendes aufweist:

Imprägnieren (1150) der Mehrzahl von Fasern (1024), die mit dem ersten Distorsionspolymerharz (1029) beschichtet sind, mit einem unausgehärteten harzartigen Matrixmaterial; und
Aushärten (1160) des ersten Distorsionspolymerharzes (1029) und des unausgehärteten harzartigen Matrixmaterials, wobei das Aushärten des ersten Distorsionspolymerharzes (1029) und des unausgehärteten harzartigen Matrixmaterials den Distorsionsinterphasenbereich ausbildet, und wobei das Ausbilden des Distorsionsinterphasenbereichs das Reagieren des ersten Distorsionspolymerharzes (1029) mit chemischen funktionalen Gruppen von zumindest einer der Mehrzahl von Fasern (1024) und dem unausgehärteten harzartigen Matrixmaterial aufweist, wobei das Aushärten die Polymerharzmatrix (1022) aus dem unausgehärteten harzartigen Matrixmaterial ausbildet, wobei das Ausbilden der Polymerharzmatrix (1022) das Reagieren des unausgehärteten Matrixmaterials mit einem Aushärtemittel aufweist.

8. Verfahren nach Anspruch 7, wobei die zweite von Mises-Spannung des ersten Distorsionspolymerharzes in dem ausgehärteten Zustand in einem Bereich von 0,3 bis 0,45 ist.

9. Verfahren nach Anspruch 7 oder 8, wobei ein Wert einer Eigenschaft für die Polymerharzmatrix größer ist als ein Wert der Eigenschaft für den ersten Distorsionspolymerharz und wobei die Eigenschaften mindestens eines freien Elastizitätsmoduls, einer Glasübergangstemperatur, einen Fluidwiderstand oder einer Klebrigkeitsdauer ist.

**10.** Verfahren nach einem der Ansprüche 7 bis 9, des Weiteren mit:
Beschichten der Mehrzahl von Fasern, die mit dem ersten Distorsionspolymerharz beschichtet sind, und einem zweiten Distorsionspolymerharz (1031), das eine dritte von Mises-Spannung aufweist, wobei die dritte von Mises-Spannung größer als die erste von Mises-Spannung und die zweite von Mises-Spannung ist.

**11.** Verfahren nach Anspruch 10, des Weiteren mit:
Ausbilden eines Faservorforms (1027), das eine Mehrzahl von Fasern aufweist, die mit dem ersten Distorsionspolymerharz beschichtet sind, und wobei das Imprägnieren der Mehrzahl von Fasern, die mit dem ersten Distorsionspolymerharz beschichtet sind, mit dem unausgehärteten harzartigen Matrixmaterial das Imprägnieren des Faservorforms mit dem unausgehärteten harzartigen Matrixmaterial aufweist.

**12.** Verfahren nach einem der Ansprüche 7 bis 11, wobei der erste Distorsionspolymerharz mindestens eine der folgenden Gruppen aufweist:

(A) Bisphenol F basiertes trifunktionales Novolack-Epoxidharz und 4,4'-Bis(3-aminophenoxy)diphenylsulfon;
(B) Bisphenol F basiertes trifunktionales Novolack-Epoxidharz und 3,3'-Diaminodiphenylsulfon;
(C) Bisphenol F basiertes trifunktionales Novolack-Epoxidharz und 1,3-Bis(3-aminophenoxy)benzen;
(D) Diglycidyl a, a'-Bis(4-hydroxyphenyl)-p-diisopropylbenzol und 4,4' Bis(3-aminophenoxy)diphenylsulfon;
(E) Bisphenol-A-diglycidylether und 1,3-Bis(4-aminophenoxy)-2,2 dimethylpropan;
(F) Bisphenol-A-diglycidylether und 3,3'-Diaminodiphenylsulfon; oder
(G) Bisphenol-A-diglycidylether und 1,3-Bis(3-aminophenoxy)-2,2 dimethylpropan.

## Revendications

**1.** Composite de résine renforcé par des fibres (1020), comprenant :

une matrice de résine polymère (1022) ayant un premier critère de déformation de von Mises;
une pluralité de fibres (1024) revêtues d'une première résine polymère déformable (1029), la première résine polymère déformable (1029) ayant un deuxième critère de déformation de von Mises de 0,25 à 0,45, et disposées dans la matrice de résine polymère, le deuxième critère de déformation de Von Mises étant supérieur au premier critère de déformation de von Mises ; et
une région d'interphase déformable (1028) disposée entre la pluralité de fibres (1024) et la matrice de résine polymère (1022), la région d'interphase déformable comprenant la première résine polymère déformable (1029), dans lequel les groupes fonctionnels chimiques d'au moins l'une de la pluralité de fibres (1024) et de la matrice de résine polymère (1022) réagissent avec la première résine polymère déformable (1029).

**2.** Composite de résine renforcé par des fibres selon la revendication 1, dans lequel le deuxième critère de déformation de von Mises est de 0,30 à 0,45, et dans lequel le premier critère de déformation de von Mises est de 0,18 à 0,24.

**3.** Composite de résine renforcé par des fibres selon la revendication 1 ou 2, dans lequel la première résine polymère déformable comprend au moins l'un des groupes suivants :

(A) résine époxyde trifonctionnelle de type Novolaque à base de bisphénol F et 4,4'-bis(3-aminophénoxy)diphénylsulfone ;
(B) résine époxyde trifonctionnelle de type Novolaque à base de bisphénol F et 3,3'-diaminodiphénylsulfone ;
(C) résine époxyde trifonctionnelle de type Novolaque à base de bisphénol F et 1,3-bis(3aminophénoxy)benzène ;
(D) diglycidyl-$\alpha,\alpha$'-bis(4-hydroxyphényl)-p-diisopropylbenzène et 4,4'-bis(3-aminophénoxy)diphénylsulfone ;
(E) éther diglycidylique de bisphénol A et 1,3-bis(4-aminophénoxy)-2,2-diméthylpropane ;
(F) éther diglycidylique de bisphénol A et 3,3'-diaminodiphénylsulfone ; ou
(G) éther diglycidylique de bisphénol A et 1,3-bis(3-aminophénoxy)-2,2-diméthylpropane.

**4.** Composite de résine renforcé par des fibres selon l'une quelconque des revendications précédentes, dans lequel la pluralité de fibres comprend au moins l'une de fibres de carbone, de fibres de verre, de fibres organiques, de fibres métalliques, ou de fibres de céramique, et dans lequel la pluralité de fibres comprend au moins l'une de fibres à faible module (1050) ayant un premier module d'élasticité de 33 msi à 36 msi, de fibres à module intermédiaire (1052) ayant un deuxième module d'élasticité de 40 msi à 45 msi, ou de fibres à module élevé (1054) ayant un troisième module d'élasticité de 45 msi à 85 msi.

5. Composite de résine renforcé par des fibres selon l'une quelconque des revendications précédentes, dans lequel une valeur d'une propriété pour la matrice de résine polymère est supérieure à une valeur de la propriété pour la première résine polymère déformable, et dans lequel la propriété comprend au moins l'un d'un module d'élasticité, d'une température de transition vitreuse, d'une résistance à des fluides, ou d'une durée d'utilisation.

6. Composite de résine renforcé par des fibres selon l'une quelconque des revendications précédentes, comprenant en outre un revêtement de résine déformable (1030) comportant une première couche (1037) comprenant la première résine polymère déformable et une deuxième couche (1039) comprenant une deuxième résine polymère déformable (1031), dans lequel la deuxième couche recouvre la première couche et dans lequel la deuxième résine polymère déformable a un troisième critère de déformation de von Mises de 0,25 à 0,45, le troisième critère de déformation de von Mises étant supérieur au premier critère de déformation de von Mises et au deuxième critère de déformation de Von Mises.

7. Procédé de fabrication d'un composite de résine renforcé par des fibres (1020), le procédé comprenant :

l'incorporation (1140) d'une pluralité dé fibres (1024) revêtues d'une première résine polymère déformable (1029) dans une matrice de résine polymère (1022), un deuxième critère de déformation de von Mises de la première résine polymère déformable dans un état durci étant de 0,25 à 0,45, et un premier critère de déformation de von Mises de la matrice de résine polymère étant inférieur au deuxième critère de déformation de von Mises ; et
la formation (1170) d'une région d'interphase déformable (1028) entre la pluralité de fibres (1024) et la matrice de résine polymère (1022),
dans lequel l'incorporation de la pluralité de fibres (1024) revêtues de la première résine polymère déformable (1029) dans la matrice de résine polymère (1022) comprend :

l'imprégnation (1150) de la pluralité dé fibres (1024) revêtues de la première résine polymère déformable (1029) avec un matériau matriciel résineux non durci ; et
le durcissement (1160) de la première résine polymère déformable (1029) et du matériau matriciel résineux non durci, le durcissement de la première résine polymère déformable (1029) et du matériau matriciel résineux non durci formant la région d'interphase déformable, et la formation de la région d'interphase déformable comprenant la réaction de la première résine polymère déformable (1029) avec des groupes fonctionnels chimiques d'au moins l'une de la pluralité de fibres (1024) et du matériau matriciel résineux non durci, le durcissement formant la matrice de résine polymère (1022) à partir du matériau matriciel résineux non durci, la formation de la matrice de résine polymère (1022) comprenant la réaction du matériau matriciel résineux non durci avec un durcisseur.

8. Procédé selon la revendication 7, dans lequel le deuxième critère de déformation de von Mises de la première résine polymère déformable dans l'état durci est de 0,30 à 0,45.

9. Procédé selon la revendication 7 ou 8, dans lequel une valeur d'une propriété pour la matrice de résine polymère est supérieure à une valeur de la propriété pour la première résine polymère déformable, et dans lequel la propriété comprend au moins l'un d'un module d'élasticité, d'une température de transition vitreuse, d'une résistance à des fluides, ou d'une durée d'utilisation.

10. Procédé selon l'une quelconque des revendications 7 à 9, comprenant en outre :
le revêtement de la pluralité de fibres revêtues de la première résine polymère déformable avec une deuxième résine polymère déformable (1031) ayant un troisième critère de déformation de von Mises, le troisième critère de déformation de Von Mises étant supérieur au premier critère de déformation de Von Mises et au deuxième critère de déformation de Von Mises.

11. Procédé selon la revendication 10, comprenant en outre :
la formation d'une préforme de fibre (1027) comprenant la pluralité de fibres revêtues de la première résine polymère déformable, et dans lequel l'imprégnation de la pluralité de fibres revêtues de la première résine polymère déformable avec le matériau matriciel résineux non durci comprend l'imprégnation de la préforme de fibre avec le matériau matriciel résineux non durci.

**12.** Procédé selon l'une quelconque des revendications 7 à 11, dans lequel la première résine polymère déformable comprend au moins l'un des groupes suivants :

(A) résine époxyde trifonctionnelle de type Novolaque à base de bisphénol F et 4,4'-bis(3-aminophénoxy)diphénylsulfone ;
(B) résine époxyde trifonctionnelle de type Novolaque à base de bisphénol F et 3,3'-diaminodiphénylsulfone ;
(C) résine époxyde trifonctionnelle de type Novolaque à base de bisphénol F et 1,3-bis(3aminophénoxy)benzène ;
(D) diglycidyl-$\alpha,\alpha$'-bis(4-hydroxyphényl)-p-diisopropylbenzène et 4,4'-bis(3-aminophénoxy)diphénylsulfone ;
(E) éther diglycidylique de bisphénol A et 1,3-bis(4-aminophénoxy)-2,2-diméthylpropane ;
(F) éther diglycidylique de bisphénol A et 3,3'-diaminodiphénylsulfone ; ou
(G) éther diglycidylique de bisphénol A et 1,3-bis(3-aminophénoxy)-2,2-diméthylpropane.

FIG. 1

20

22

25

BULK RESIN MATRIX

26

DISTORTIONAL RESIN COATING

24

REINFORCING FIBERS

FIG. 2

23

4

24

FIG. 3

25

26

24

22

FIG. 4

FIG. 5

FIG. 6

FIG. 7

FIG. 8

FIG. 9

1020

FIG. 10

1022  FIBER-REINFORCED
RESIN COMPOSITE

POLYMERIC RESIN MATRIX

| NUMBER OF POLYMERIC RESINS | VON MISES STRAIN |
|---|---|

1023    1030                    1025

1030

1032  DISTORTIONAL RESIN COATING

NUMBER OF LAYERS

FIRST LAYER

1037    1039

SECOND LAYER

DISTORTIONAL
INTERPHASE
REGION
1028

1029    FIRST DISTORTIONAL POLYMERIC RESIN

1033    VON MISES STRAIN

1031    SECOND DISTORTIONAL POLYMERIC RESIN

1035    VON MISES STRAIN

NUMBER OF DISTORTIONAL POLYMERIC RESINS

1024                    1026

PLURALITY OF FIBERS

1027    FIBER PREFORM

1050    LOW MODULUS FIBERS

1052    INTERMEDIATE MODULUS FIBERS

1054    HIGH MODULUS FIBERS

1100

START

1110 — SELECT RAW COMPONENTS

1120 — PREPARE AN UNCURED NUMBER OF DISTORTIONAL POLYMERIC RESINS

1130 — COAT A PLURALITY OF FIBERS WITH UNCURED NUMBER OF DISTORTIONAL POLYMERIC RESINS

1140 — EMBED THE PLURALITY OF FIBERS COATED WITH A FIRST DISTORTIONAL POLYMERIC RESIN IN A POLYMERIC RESIN MATRIX

1150 — IMPREGNATE THE PLURALITY OF FIBERS COATED WITH THE FIRST DISTORTIONAL POLYMERIC RESIN WITH AN UNCURED RESIN MATRIX MATERIAL

1160 — CURE THE FIRST DISTORTIONAL POLYMERIC RESIN AND THE UNCURED RESINOUS MATRIX MATERIAL AND FORM THE POLYMERIC RESINOUS MATRIX FROM UNCURED RESINOUS MATRIX MATERIAL

1170 — FORM A DISTORTIONAL INTERPHASE REGION BETWEEN THE PLURALITY OF FIBERS AND THE POLYMERIC RESIN MATRIX

END

FIG. 11

46

## FIG. 12

50 — SPECIFICATION AND DESIGN

52 — MATERIAL PROCUREMENT

54 — COMPONENT AND SUBASSEMBLY MANUFACTURING

56 — SYSTEM INTEGRATION

58 — CERTIFICATION AND DELIVERY

60 — IN SERVICE

62 — MAINTENANCE AND SERVICE

48

## FIG. 13

AIRCRAFT

64 — AIRFRAME          INTERIOR — 68

SYSTEMS

PROPULSION          ELECTRICAL

70          74

HYDRAULIC          ENVIRONMENTAL

72          76

66

# FIG. 14

FIG. 15

EP 3 068 823 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012149802 A1
- US 2007149725 A1
- US 7745549 B